# EUROPEAN PATENT SPECIFICATION

(11) **EP 0 953 580 B1**
(45) Date of publication and mention of the grant of the patent: **14.04.2004**
(21) Application number: 99500065.0
(22) Date of filing: 26.04.1999
(51) Int. Cl.: C08F 4/60, C08F 10/00

(54) **Preparation and use of heterogeneous catalyst components for olefins polymerization**
Verfahren und Verwendung von heterogenen Katalysatorbestandteilen für die Olefinpolymerisation
Préparation et utilisation de composés catalytiques hétérogènes pour la polymérisation d'oléfines

(30) Priority: 29.04.1998 EP 98500106
(43) Date of publication of application: 03.11.1999
(73) Proprietor: REPSOL QUIMICA S.A., E-28046 Madrid (ES)
(72) Inventor: Hidalgo LLinas, Gerardo, 30319 Cartagena, Murcia (ES); Munoz-Escalona Lafuente, Antonio, 28223 Madrid (ES)
(74) Representative: Del Santo Abril, Natividad

(56) References cited:
- PLENIO H ET AL: "eta-Complexes of cyclopentadienylsilylethers (C5H4OSiR3) and hydroxycyclopentadiene (C5H4OH) with titanium and zirconium chlorides" JOURNAL OF ORGANOMETALLIC CHEMISTRY, vol. 544, no. 1, 5 October 1997 (1997-10-05), page 133-137 XP004093832

## Description

The present invention relates to heterogeneous catalytic systems and its use in olefin polymerization.

### STATE OF THE ART

It is very well known that homogeneous catalytic systems present a disadvantage: when they are used in suspension polymerization processes, a part of the produced polymer adheres to the reactor walls; this effect is technically called "reactor fouling". Besides, in most cases, the particle size of the obtained polymer is very small and the apparent density is low, thus the industrial production is reduced. In order to prevent the reactor from fouling and to control the size and the morphology of the polymer particles which are formed, the homogeneous system can be supported on an inorganic oxide.

In the last years different preparatory strategies have been used in order to reach this aim. EPA-206794 (Exxon) discloses a catalyst which comprises a carrier, a metallocene, and an alumoxane. The carrier is first treated with alumoxane and then the metallocene is added. EP-A-295312 (Mitsui) discloses a catalyst consisting of a carrier wherein alumoxane is precipitated and then the resulting material is impregnated with a metallocene. No additional cocatalyst is used in the polymerization process.

The first application claiming a process wherein the metallocene is covalently bonded to the support surface is EP 293815 (HOECHST). The metallocene contains a SiOR group that reacts with the OH groups on the surface of the support.

EP 757053 (HOECHST) supports the metallocene by reacting the hydroxyls of the inorganic support with a metallocene which contains a M-R-Z-CI group, wherein M is Si, Ge or Sn and Z is B, Si, Ge or Sn.

EP 757992 (Repsol) supports functionalized metallocenes being Cl-Si(Me₂)- by reacting the organometallic compound with or without functionalized carriers.

Unpublished application EP 97500187.6 in the name of the applicant supports the metallocene by reacting a metallocene containing a group OSiR"₃ wherein R" is C₁-C₂₀ alkyl, C₃-C₂₀ cycloalkyl, C₆-C₂₀ aryl, C₇-C₂₀ alkenyl or C₇-C₂₀ arylalkenyl with a inorganic support.

Object of the present invention is the preparation of a supported catalyst for polymerization of olefins, which results in a polymer having a very good morphology.

Thanks to the methods described in the present invention, heterogeneous catalysts can be obtained; they allow to effectively control the morphology and the distribution of particle sizes, with a regular growth of the polymer around the catalyst particles.

A further object of the present invention is a process for obtaining a supported catalyst by reacting a metallocene compound having an hydroxy group with an alumoxane or a trialkylaluminum.

### DETAILED DESCRIPTION OF THE INVENTION

The present invention relates to heterogeneous catalytic systems obtained by reacting a specific class of metallocene compounds with an inorganic support.

According to the present invention the specific class of metallocene compounds is defined by general formulas I, II and III.

(LRₖ)_{z}[LR_{k-f}(R^{I}OH)_{f}]ₓMX_{y} I

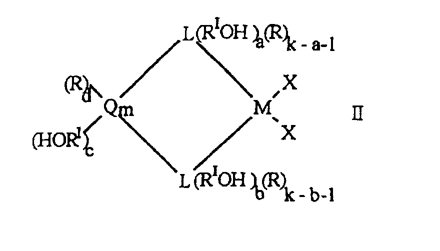

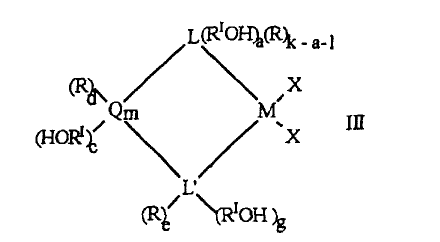

wherein:
L, equal to or different from each other, is selected from the group comprising: cyclopentadienyl, indenyl, tetrahydroindenyl, fluorenyl, octahydrofluorenyl and benzoindenyl;
each R is independently selected from hydrogen, C₁-C₂₀ alkyl, C₃-C₂₀ cycloalkyl, C₆-C₂₀ aryl, C₃-C₂₀ alkenyl, C₇-C₂₀ arylalkyl, C₇-C₂₀ alkylaryl, C₈-C₂₀ arylalkenyl, linear or branched, optionally substituted by 1 to 10 halogen atoms, or a group SiR^{II}₃;
each R^{I} is independently a group SiR^{II}₂ or a divalent aliphatic or aromatic hydrocarbon group containing from 1 to 20 carbon atoms, optionally containing from 1 to 5 heteroatoms of groups 14 to 16 of the periodic table of the elements and boron ; preferably it is: C₁-C₂₀ alkylene, C₃-C₂₀cycloalkylene, C₆-C₂₀ arylene, C₇-C₂₀ alkenyl, C₇-C₂₀arylalkylene, or alkylarylene, linear or branched, or a group SiR^{II}₂;
each Q is independently selected from B, C, Si, Ge, Sn;
M is a metal of group 3, 4 or 10 of the Periodic Table, Lanthanide or Actinide; preferably it is titanium, zirconium or hafnium;
each X is independently selected from: hydrogen, chlorine, bromine, OR^{II}, NR^{II}₂, C₁-C₂₀ alkyl or C₆-C₂₀ aryl ;
each R^{II} is independently selected from C₁-C₂₀ alkyl , C₃-C₂₀ cycloalkyl, C₆-C₂₀ aryl, C₃-C₂₀ alkenyl, C₇-C₂₀ arylalkyl, C₈-C₂₀ arylalkenyl or C₇-C₂₀ alkylaryl, linear or branched; preferably R^{II} is methyl, ethyl, isopropyl;
L' is N or O;
k depends of the type of L; more specifically when L is cyclopentadienyl k is equal to 5, when L is indenyl k is equal to 7, when L is fluorenyl or benzoindenyl k is equal to 9, when L is tetrahydroindenyl k is equal to 11 and when L is octahydrofluorenyl, k is equal to 17;
z is equal to 0, 1 or 2;
x is equal to 1, 2 or 3;
y is equal to 1, 2 or 3;
x + y + z is equal to the valence of M;
m is an integer which can assume the values 1, 2, 3 or 4;
a and b are integers whose value ranges from 0 to k-1;
f is an integer whose value ranges from 1 to k; preferably f is 1;
g is an integer whose value ranges from 0 to 1;
c and e are equal to 0 or 1;
a + b + c is at least 1; preferably a + b + c is 1 or 2,
a + g + c is at least 1; preferably a + g + c is 1 or 2;
d is equal to 0, 1 or 2;
when Q is B, then c + d = 1;
when Q is C, Si, Ge or Sn, then c + d = 2;
when L' is N, then g + e = 1;
when L' is O, then g = 0 and e = 0.

Non limiting examples of R'OH are:
CH₂-CH₂OH; CH₂-CH₂-CH₂OH; O-CH₂-CH₂OH; SiMe₂-CH₂-CH₂OH; CH₂-C₅H₅-CH₂OH; CH(C₂H₅)-CH₂OH; C(CH₃)₂-C(CH₃)₂OH; CH(CH₃)-CH(CH₃)OH; SiMe₂-CH₂-CH₂-CH₂OH.

Preferably R^{I}OH is selected from CH₂-CH₂OH, CH₂-CH₂-CH₂OH, O-CH₂-CH₂OH, SiMe₂-CH₂-CH₂-CH₂OH.

SiMe₂-CH₂-CH₂OH.

Preferred structures of compounds of formula I, II and III are the following:

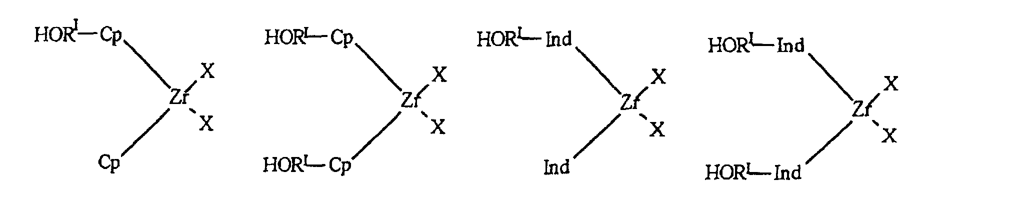

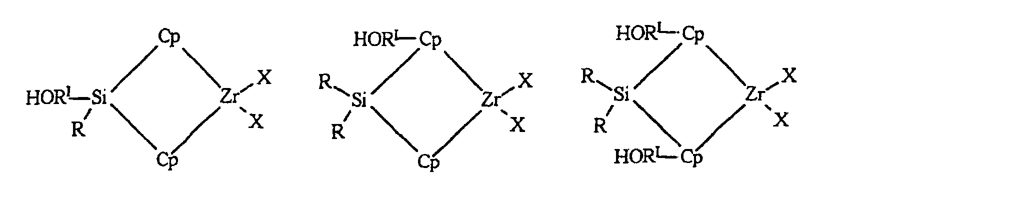

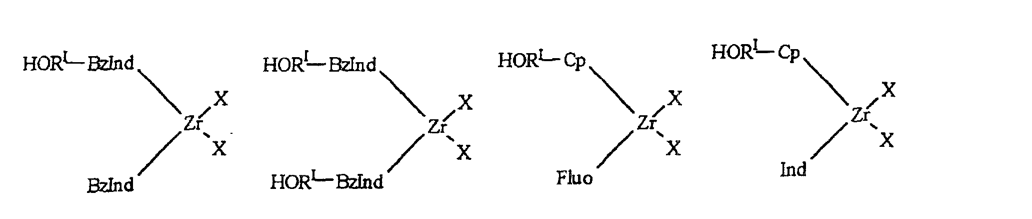

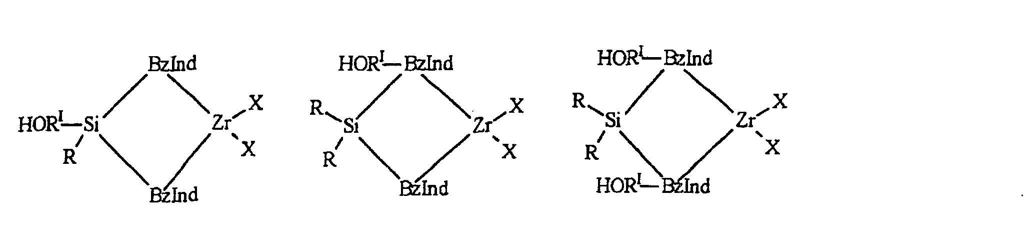

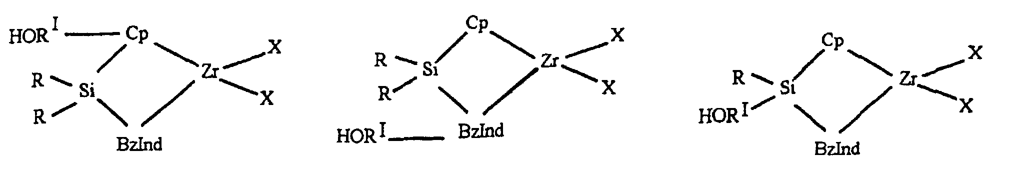

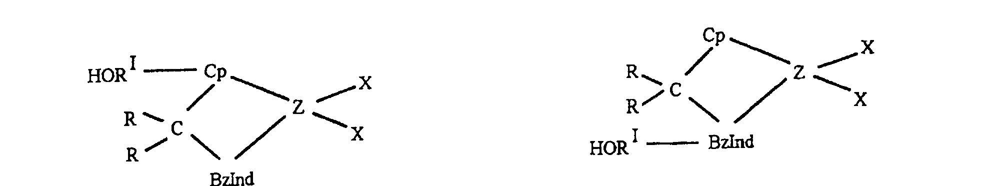

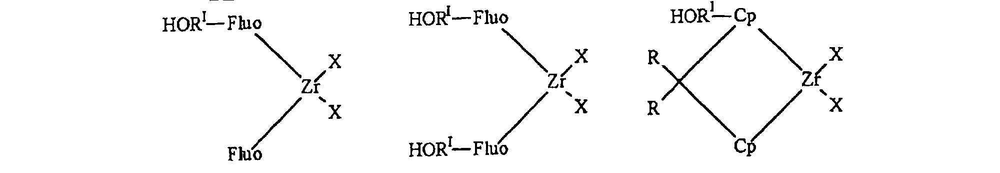

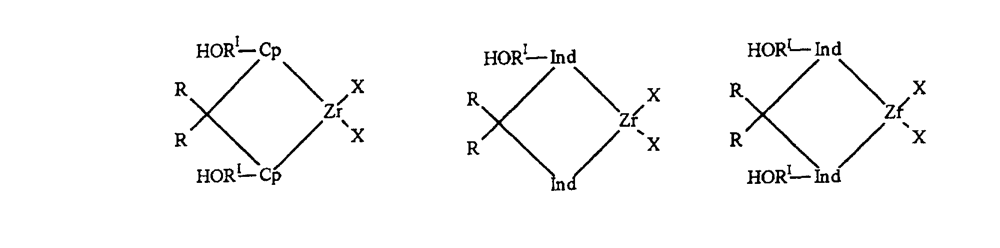

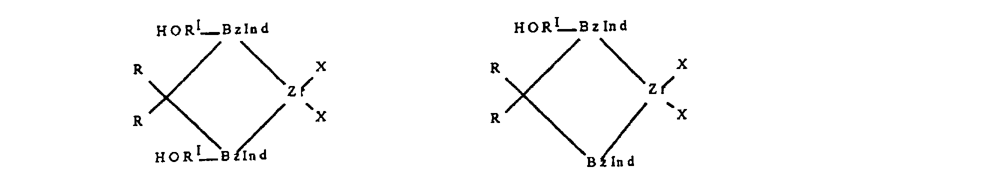

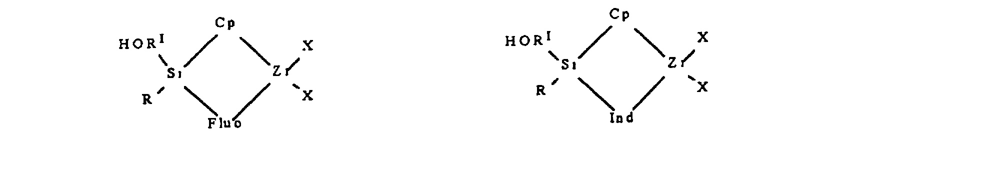

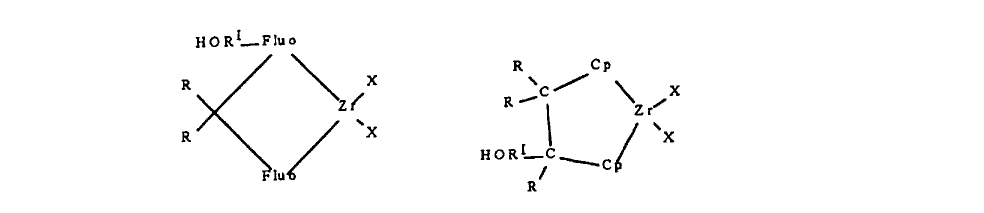

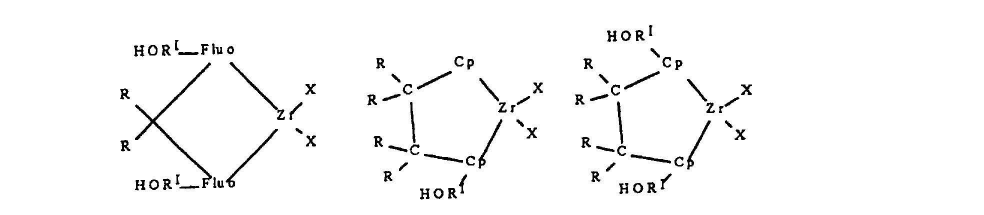

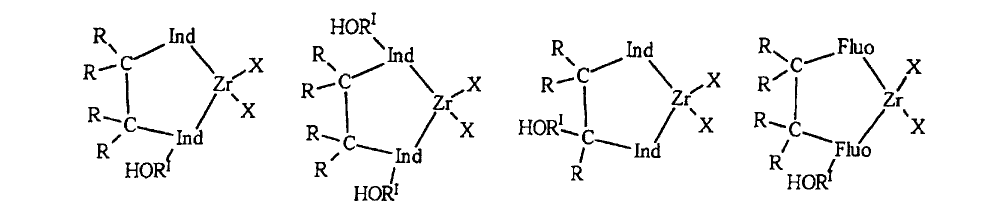

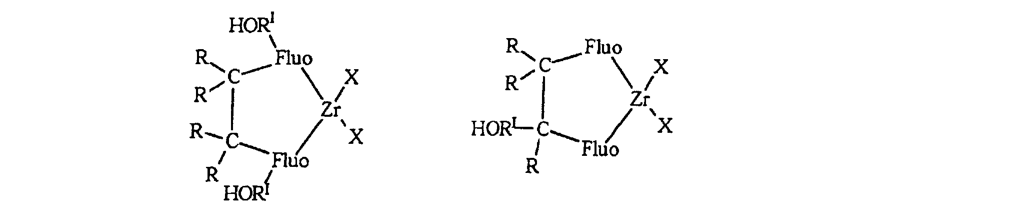

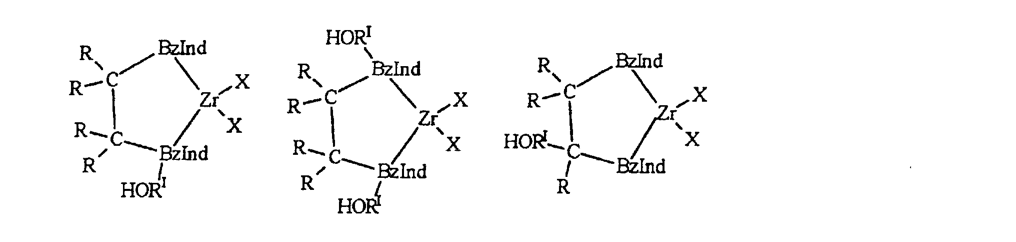

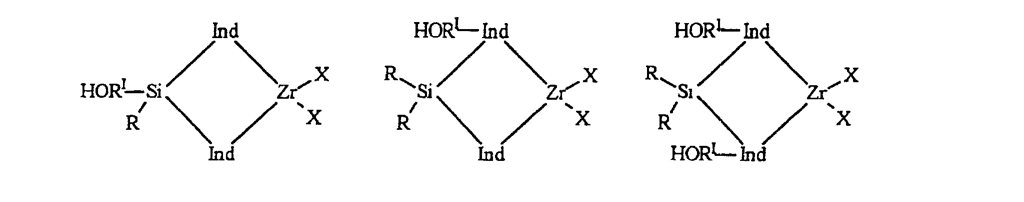

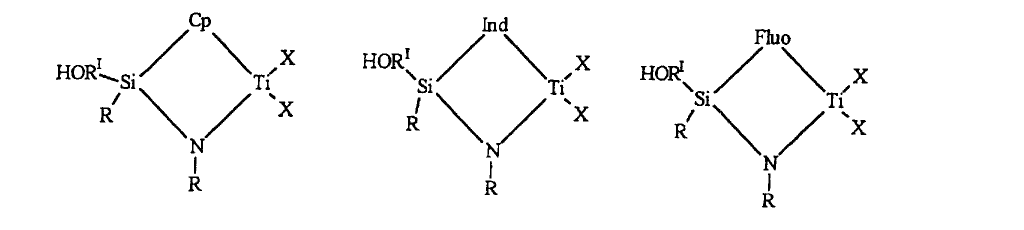

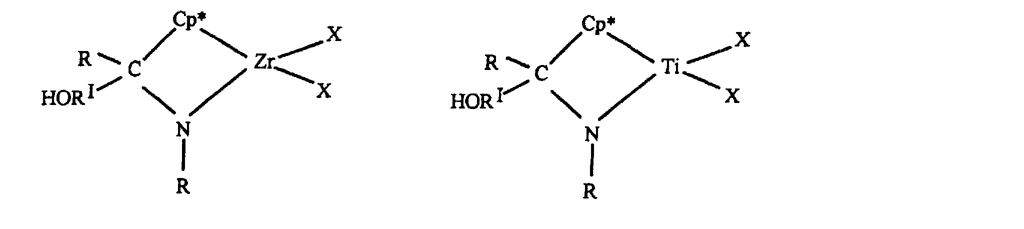

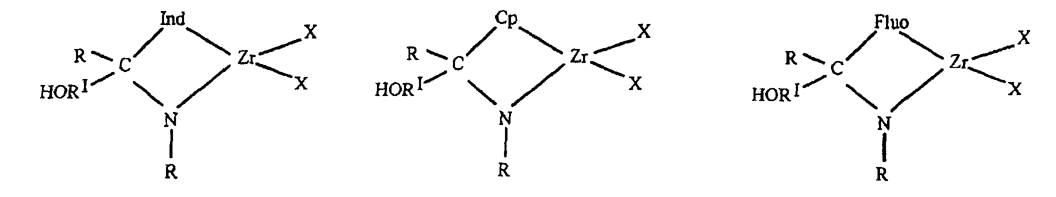

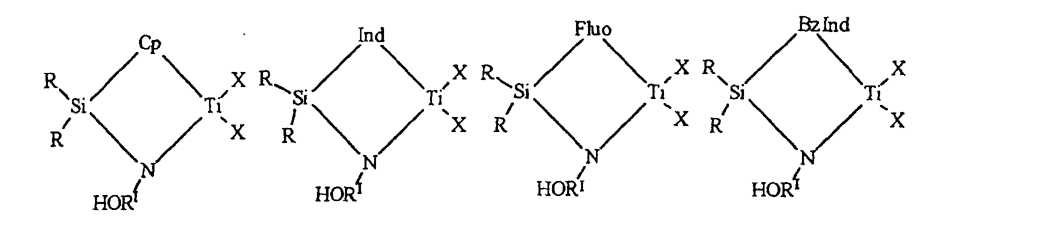

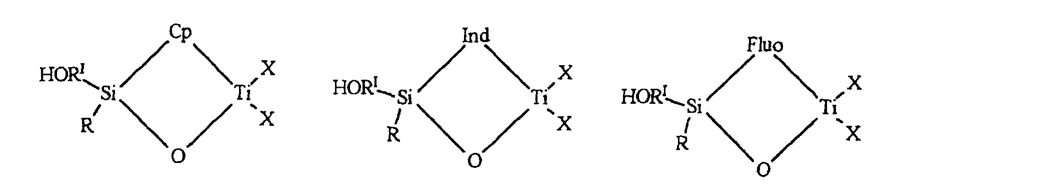

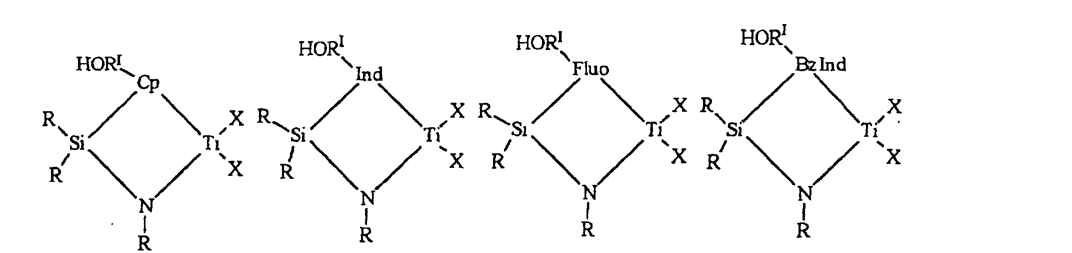

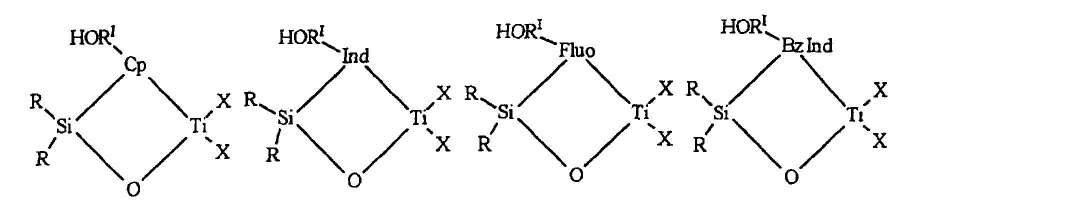

Cp, Ind, Bzlnd and Fluo indicate respectively a cyclopentadienyl, indenyl, benzoindenyl and fluorenyl ring optionally substituted by C₁-C₂₀ alkyl , C₃-C₂₀ cycloalkyl, C₆-C₂₀ aryl, C₃-C₂₀ alkenyl, C₇-C₂₀ arylalkyl, C₈-C₂₀ arylalkenyl or C₇-C₂₀ alkylaryl; the maximum number of substituents depends on the amount of hydrogen which can be substituted; R, R^{I} and X have the above indicated meaning.

Preferred compounds for use in the present invention are the following:
bis(2-hydroxyethyl-cyclopentadienyl) zirconium dichloride;
(2-hydroxyethyl-cyclopentadienyl)(cyclopentadienyl) zirconium dichloride ;
(2-hydroxyethyl-cyclopentadienyl)(indenyl) zirconium dichloride;
(2-hydroxyethyl-cyclopentadienyl)(2-methyl-indenyl) zirconium dichloride;
(2-hydroxyethyl-cyclopentadienyl)(fluorenyl) zirconium dichloride;
(2-hydroxyethyl-cyclopentadienyl)(9-methyl-fluorenyl) zirconium dichloride;
(2-hydroxyethyl-cyclopentadienyl)(pentamethylcyclopentadienyl) zirconium dichloride;
bis(3-hydroxyropyl-cyclopentadienyl) zirconium dichloride;
(3-hydroxyropyl-cyclopentadienyl)(cyclopentadienyl) zirconium dichloride ;
(3-hydroxyropyl-cyclopentadienyl)(indenyl) zirconium dichloride;
(3-hydroxyropyl-cyclopentadienyl)(2-methyl-indenyl) zirconium dichloride;
(3-hydroxyropyl-cyclopentadienyl)(fluorenyl) zirconium dichloride;
(3-hydroxyropyl-cyclopentadienyl)(9-methyl-fluorenyl) zirconium dichloride;
(3-hydroxyropyl-cyclopentadienyl)(pentamethylcyclopentadienyl) zirconium dichloride;
bis(2-hydroxy-ethoxy-cyclopentadienyl) zirconium dichloride;
(2-hydroxy-ethoxy-cyclopentadienyl)(cyclopentadienyl) zirconium dichloride ;
(2-hydroxy-ethoxy-cyclopentadienyl)(1-indenyl) zirconium dichloride;
(2-hydroxy-ethoxy-cyclopentadienyl)(2-methyl-indenyl) zirconium dichloride;
(2-hydroxy-ethoxy-cyclopentadienyl)(fluorenyl) zirconium dichloride;
(2-hydroxy-ethoxy-cyclopentadienyl)(9-methyl-fluorenyl) zirconium dichloride;
(2-hydroxy-ethoxy-cyclopentadienyl)(pentamethylcyclopentadienyl) zirconium dichloride;
bis(2-hydroxy-ethyl-(dimethyl)silyl-cyclopentadienyl) zirconium dichloride;
(2-hydroxy-ethyl-(dimethyl)silyl-cyclopentadienyl)(cyclopentadienyl) zirconium dichloride;
(2-hydroxy-ethyl-(dimethyl)silyl-cyclopentadienyl)(indenyl) zirconium dichloride;
(2-hydroxy-ethyl-(dimethyl)silyl-cyclopentadienyl)(2-methyl-indenyl) zirconium dichloride;
(2-hydroxy-ethyl-(dimethyl)silyl-cyclopentadienyl)(fluorenyl) zirconium dichloride;
(2-hydroxy-ethyl-(dimethyl)silyl-cyclopentadienyl)(9-methyl-fluorenyl) zirconium dichloride;
(2-hydroxy-ethyl-(dimethyl)silyl-cyclopentadienyl)(pentamethylcyclopentadienyl) zirconium dichloride;
(3-hydroxy-propyl-(dimethyl)silyl-cyclopentadienyl)(cyclopentadienyl) zirconium dichloride;
(3-hydroxy-propyl-(dimethyl)silyl-cyclopentadienyl)(indenyl) zirconium dichloride;
(3-hydroxy-propyl-(dimethyl)silyl-cyclopentadienyl)(2-methyl-indenyl) zirconium dichloride;
(3-hydroxy-propyl-(dimethyl)silyl-cyclopentadienyl)(fluorenyl) zirconium dichloride;
(3-hydroxy-propyl-(dimethyl)silyl-cyclopentadienyl)(9-methyl-fluorenyl) zirconium dichloride;
(3-hydroxy-propyl-(dimethyl)silyl-cyclopentadienyl)(pentamethylcyclopentadienyl) zirconium dichloride;
bis(2-hydroxy-(dimethyl)silyl-cyclopentadienyl) zirconium dichloride;
(2-hydroxy-(dimethyl)silyl-cyclopentadienyl)(cyclopentadienyl) zirconium dichloride;
dimethylsilandiylbis(2-(2-hydroxyethyl)-cyclopentadienyl) zirconium dichloride;
dimethylsilandiylbis(3-(2-hydroxyethyl)-cyclopentadienyl) zirconium dichloride;
dimethylsilandiyl(3-(2-hydroxyethyl)-cyclopentadienyl) (ciclopentadienil) zirconium dichloride;
dimethylsilandiyl(2-(2-hydroxyethyl)-cyclopentadienyl)(1-indenyl) zirconium dichloride;
dimethylsilandiyl(3-(2-hydroxyethyl)-cyclopentadienyl)(1-indenyl) zirconium dichloride;
dimethylsilandiyl(2-(2-hydroxyethyl)-cyclopentadienyl)(1-(2-methyl-indenyl)) zirconium dichloride;
dimethylsilandiyl(3-(2-hydroxyethyl)-cyclopentadienyl)(1-(2-methyl-indenyl)) zirconium dichloride;
dimethylsilandiyl(2-(2-hydroxyethyl)-cyclopentadienyl)(9-fluorenyl) zirconium dichloride;
dimethylsilandiyl(3-(2-hydroxyethyl)-cyclopentadienyl)(9-fluorenyl) zirconium dichloride;
dimethylsilandiyl(2-(2-hydroxyethyl)-cyclopentadienyl)(9-(2-methyl-fluorenyl)) zirconium dichloride;
dimethylsilandiyl(3-(2-hydroxyethyl)-cyclopentadienyl)(9-(2-methyl-fluorenyl)) zirconium dichloride;
dimethylsilandiyl(3-(2-hydroxyethyl)-cyclopentadienyl)(1-(2methylbenzoindenyl)) zirconium dichloride;
dimethylsilandiylbis(2-(3-hydroxypropyl)-cyclopentadienyl) zirconium dichloride;
dimethylsilandiylbis(3-3-hydroxyropyl-cyclopentadienyl) zirconium dichloride;
dimethylsilandiyl(3-3-hydroxyropyl-cyclopentadienyl) (ciclopentadienil) zirconium dichloride;
dimethylsilandiyl(2-(3-hydroxypropyl)-cyclopentadienyl)(1-indenyl) zirconium dichloride;
dimethylsilandiyl(3-3-hydroxyropyl-cyclopentadienyl)(1-indenyl) zirconium dichloride;
dimethylsilandiyl(2-(3-hydroxypropyl)-cyclopentadienyl)(1-(2-methyl-indenyl)) zirconium dichloride;
dimethylsilandiyl(3-3-hydroxyropyl-cyclopentadienyl)(1-(2-methyl-indenyl)) zirconium dichloride;
dimethylsilandiyl(2-(3-hydroxypropyl)-cyclopentadienyl)(9-fluorenyl) zirconium dichloride;
dimethylsilandiy(3-3-hydroxyropyl-cyclopentadienyl)(9-fluorenyl) zirconium dichloride;
dimethylsilandiyl(2-(3-hydroxypropyl)-cyclopentadienyl)(9-(2-methyl-fluorenyl)) zirconium dichloride;
dimethylsilandiyl(3-3-hydroxyropyl-cyclopentadienyl)(9-(2-methyl-fluorenyl)) zirconium dichloride;
dimethylsilandiyl(3-3-hydroxyropyl-cyclopentadienyl)(1-(2methylbenzoindenyl)) zirconium dichloride;
dimethylsilandiylbis(2-(2-hydroxy)-ethoxy-cyclopentadienyl) zirconium dichloride;
dimethylsilandiylbis(3-(2-hydroxy)-ethoxy-cyclopentadienyl) zirconium dichloride;
dimethylsilandiyl(2-(2-hydroxy)-ethoxy-cyclopentadienyl)(1-indenyl) zirconium dichloride;
dimethylsilandiy(3-(2-hydroxy)-ethoxy-cyclopentadienyl)(1-indenyl) zirconium dichloride;
dimethylsilandiyl(2-(2-hydroxy)-ethoxy-cyclopentadienyl)(1-(2-methyl-indenyl)) zirconium dichloride;
dimethylsilandiyl(3-(2-hydroxy)-ethoxy-cyclopentadienyl)(1-(2-methyl-indenyl)) zirconium dichloride;
dimethylsilandiyl(2-(2-hydroxy)-ethoxy-cyclopentadienyl)(9-fluorenyl) zirconium dichloride;
dimethylsilandiyl(3-(2-hydroxy)-ethoxy-cyclopentadienyl)(9-fluorenyl) zirconium dichloride;
dimethylsilandiyl(2-(2-hydroxy)-ethoxy-cyclopentadienyl)(9-(2-methyl-fluorenyl)) zirconium dichloride;
dimethylsilandiyl(3-(2-hydroxy)-ethoxy-cyclopentadienyl)(9-(2-methyl-fluorenyl)) zirconium dichloride;
dimethylsilandiylbis(2-(2-hydroxy-ethyl-(dimethyl)silyl)-cyclopentadienyl) zirconium dichloride;
dimethylsilandiylbis(3-(2-hydroxy-ethyl-(dimethyl)silyl)-cyclopentadienyl) zirconium dichloride;
dimethylsilandiyl(2-(2-hydroxy-ethyl-(dimethyl)silyl)-cyclopentadienyl)(1-indenyl) zirconium dichloride;
dimethylsilandiyl(3-(2-hydroxy-ethyl-(dimethyl)silyl)-cyclopentadienyl)(1-indenyl) zirconium dichloride;
dimethylsilandiyl(2-(2-hydroxy-ethyl-(dimethyl)silyl)-cyclopentadienyl)(1-(2-methyl-indenyl)) zirconium dichloride;
dimethylsilandiyl(3-(2-hydroxy-ethyl-(dimethyl)silyl)-cyclopentadienyl)(1-(2-methyl-indenyl)) zirconium dichloride;
dimethylsilandiyl(2-(2-hydroxy-ethyl-(dimethyl)silyl)-cyclopentadienyl)(9-fluorenyl) zirconium dichloride;
dimethylsilandiyl(3-(2-hydroxy-ethyl-(dimethyl)silyl)-cyclopentadienyl)(9-fluorenyl) zirconium dichloride;
dimethylsilandiyl(2-(2-hydroxy-ethyl-(dimethyl)silyl)-cyclopentadienyl)(9-(2-methyl-fluorenyl)) zirconium dichloride;
dimethylsilandiyl(3-(2-hydroxy-ethyl-(dimethyl)silyl)-cyclopentadienyl)(9-(2-methyl-fluorenyl)) zirconium dichloride;
dimethylsilandiyl(3-(2-hydroxy-(dimethyl)silyl)-cyclopentadienyl)(1-indenyl) zirconium dichloride;
dimethylsilandiyl(3-(2-hydroxy-(dimethyl)silyl)-cyclopentadienyl)(1-(2-methylbenzoindenyl)) zirconium dichloride;
dimethylsilandiylbis(3-(2-hydroxy-(dimethyl)silyl-1-indenyl) zirconium dichloride;
dimethylsilandiyl(3-(2-hydroxy-(dimethyl)silyl-1-indenyl) (1-indenyl)zirconium dichloride;

isopropylidenebis(2-(2-hydroxyethyl)-cyclopentadienyl) zirconium dichloride;
isopropylidenebis(3-(2-hydroxyethyl)-cyclopentadienyl) zirconium dichloride;
isopropylidene(2-(2-hydroxyethyl)-cyclopentadienyl)(1-indenyl) zirconium dichloride;
isopropylidene(3-(2-hydroxyethyl)-cyclopentadienyl)(1-indenyl) zirconium dichloride;
isopropylidene(2-(2-hydroxyethyl)-cyclopentadienyl)(1-(2-methyl-indenyl)) zirconium dichloride;
isopropylidene(3-(2-hydroxyethyl)-cyclopentadienyl)(1-(2-methyl-indenyl)) zirconium dichloride;
isopropylidene(2-(2-hydroxyethyl)-cyclopentadienyl)(9-fluorenyl) zirconium dichloride;
isopropylidene(3-(2-hydroxyethyl)-cyclopentadienyl)(9-fluorenyl) zirconium dichloride;
isopropylidene(2-(2-hydroxyethyl)-cyclopentadienyl)(9-(2-methyl-fluorenyl)) zirconium dichloride;
isopropylidene(3-(2-hydroxyethyl)-cyclopentadienyl)(9-(2-methyl-fluorenyl)) zirconium dichloride;
isopropylidene(3-(2-hydroxyethyl)-cyclopentadienyl)(1-(2methylbenzoindenyl)) zirconium dichloride;
isopropylidenebis(2-(3-hydroxypropyl)-cyclopentadienyl) zirconium dichloride;
isopropylidenebis(3-(3-hydroxyropyl)-cyclopentadienyl) zirconium dichloride;
isopropylidene(2-(3-hydroxypropyl)-cyclopentadienyl)(1-indenyl) zirconium dichloride;
isopropylidene(3-(3-hydroxyropyl)-cyclopentadienyl)(1-indenyl) zirconium dichloride;
isopropylidene(2-(3-hydroxypropyl)-cyclopentadienyl)(1-(2-methyl-indenyl)) zirconium dichloride;
isopropylidene(3-(3-hydroxyropyl)-cyclopentadienyl)(1-(2-methyl-indenyl)) zirconium dichloride;
isopropylidene(2-(3-hydroxypropyl)-cyclopentadienyl)(9-fluorenyl) zirconium dichloride;
isopropylidene(3-(3-hydroxyropyl)-cyclopentadienyl)(9-fluorenyl) zirconium dichloride;
isopropylidene(2-(3-hydroxypropyl)-cyclopentadienyl)(9-(2-methyl-fluorenyl)) zirconium dichloride;
isopropylidene(3-(3-hydroxyropyl)-cyclopentadienyl)(9-(2-methyl-fluorenyl)) zirconium dichloride;
isopropylidene(3-(3-hydroxyropyl)-cyclopentadienyl)(1-(2methylbenzoindenyl)) zirconium dichloride;
isopropylidenebis(2-(2-hydroxy-ethoxy)-cyclopentadienyl) zirconium dichloride;
isopropylidenebis(3-(2-hydroxy-ethoxy)-cyclopentadienyl) zirconium dichloride;
isopropylidene(2-(2-hydroxy-ethoxy)-cyclopentadienyl)(1-indenyl) zirconium dichloride;
isopropylidene(3-(2-hydroxy-ethoxy)-cyclopentadienyl)(1-indenyl) zirconium dichloride;
isopropylidene(2-(2-hydroxy-ethoxy)-cyclopentadienyl)(1-(2-methyl-indenyl)) zirconium dichloride;
isopropylidene(3-(2-hydroxy-ethoxy)-cyclopentadienyl)(1-(2-methyl-indenyl)) zirconium dichloride;
isopropylidene(2-(2-hydroxy-ethoxy)-cyclopentadienyl)(9-fluorenyl) zirconium dichloride;
isopropylidene(3-(2-hydroxy-ethoxy)-cyclopentadienyl)(9-fluorenyl) zirconium dichloride;
isopropylidene(2-(2-hydroxy-ethoxy)-cyclopentadienyl)(9-(2-methyl-fluorenyl)) zirconium dichloride;
isopropylidene(3-(2-hydroxy-ethoxy)-cyclopentadienyl)(9-(2-methyl-fluorenyl)) zirconium dichloride;
isopropylidenebis(2-(2-hydroxy-ethyl-(dimethyl)silyl)-cyclopentadienyl) zirconium dichloride;
isopropylidenebis(3-(2-hydroxy-ethyl-(dimethyl)silyl)-cyclopentadienyl) zirconium dichloride;
isopropylidene(2-(2-hydroxy-ethyl-(dimethyl)silyl)-cyclopentadienyl)(1-indenyl) zirconium dichloride;
isopropylidene(3-(2-hydroxy-ethyl-(dimethyl)silyl)-cyclopentadienyl)(1-indenyl) zirconium dichloride;
isopropylidene(2-(2-hydroxy-ethyl-(dimethyl)silyl)-cyclopentadienyl)(1-(2-methyl-indenyl)) zirconium dichloride;
isopropylidene(3-(2-hydroxy-ethyl-(dimethyl)silyl)-cyclopentadienyl)(1-(2-methyl-indenyl)) zirconium dichloride;
isopropylidene(2-(2-hydroxy-ethyl-(dimethyl)silyl)-cyclopentadienyl)(9-fluorenyl) zirconium dichloride;
isopropylidene(3-(2-hydroxy-ethyl-(dimethyl)silyl)-cyclopentadienyl)(9-fluorenyl) zirconium dichloride;
isopropylidene(2-(2-hydroxy-ethyl-(dimethyl)silyl)-cyclopentadienyl)(9-(2-methyl-fluorenyl)) zirconium dichloride;
isopropylidene(3-(2-hydroxy-ethyl-(dimethyl)silyl)-cyclopentadienyl)(9-(2-methyl-fluorenyl)) zirconium dichloride;
isopropylidene(2-(2-hydroxy-(dimethyl)silyl)-cyclopentadienyl)(1-indenyl) zirconium dichloride;
isopropylidene(2-(2-hydroxy-(dimethyl)silyl)-cyclopentadienyl)(1-(2-methylbenzoindenyl)) zirconium dichloride;
ethylidenebis(2-(2-hydroxyethyl)-cyclopentadienyl) zirconium dichloride;
ethylidenebis(3-(2-hydroxyethyl)-cyclopentadienyl) zirconium dichloride;
ethylidene(3-(2-hydroxyethyl)-cyclopentadienyl) (cyclopentadienyl) zirconium dichloride;
ethylidene(2-(2-hydroxyethyl)-cyclopentadienyl)(1-indenyl) zirconium dichloride;
ethylidene(3-(2-hydroxyethyl)-cyclopentadienyl)(1-indenyl) zirconium dichloride;
ethylidene(2-(2-hydroxyethyl)-cyclopentadienyl)(1-(2-methyl-indenyl)) zirconium dichloride;
ethylidene(3-(2-hydroxyethyl)-cyclopentadienyl)(1-(2-methyl-indenyl)) zirconium dichloride;
ethylidene(2-(2-hydroxyethyl)-cyclopentadienyl)(9-fluorenyl) zirconium dichloride;
ethylidene(3-(2-hydroxyethyl)-cyclopentadienyl)(9-fluorenyl) zirconium dichloride;
ethylidene(2-(2-hydroxyethyl)-cyclopentadienyl)(9-(2-methyl-fluorenyl)) zirconium dichloride;
ethylidene(3-(2-hydroxyethyl)-cyclopentadienyl)(9-(2-methyl-fluorenyl)) zirconium dichloride;
ethylidenebis(2-(3-hydroxypropyl)-cyclopentadienyl) zirconium dichloride;
ethylidenebis(3-(3-hydroxyropyl)-cyclopentadienyl) zirconium dichloride;
ethylidene(3-(3-hydroxyropyl)-cyclopentadienyl) (cyclopentadienyl) zirconium dichloride;
ethylidene(2-(3-hydroxypropyl)-cyclopentadienyl)(1-indenyl) zirconium dichloride;
ethylidene(3-3-hydroxyropyl-cyclopentadienyl)(1-indenyl) zirconium dichloride;
ethylidene(2-(3-hydroxypropyl)-cyclopentadienyl)(1-(2-methyl-indenyl)) zirconium dichloride;
ethylidene(3-(3-hydroxyropyl)-cyclopentadienyl)(1-(2-methyl-indenyl)) zirconium dichloride;
ethylidene(2-(3-hydroxypropyl)-cyclopentadienyl)(9-fluorenyl) zirconium dichloride;
ethylidene(3-3-hydroxyropyl-cyclopentadienyl)(9-fluorenyl) zirconium dichloride;
ethylidene(2-(3-hydroxypropyl)-cyclopentadienyl)(9-(2-methyl-fluorenyl)) zirconium dichloride;
ethylidene(3-3-hydroxyropyl-cyclopentadienyl)(9-(2-methyl-fluorenyl)) zirconium dichloride;
ethylidenebis(2-(2-hydroxy-ethoxy)-cyclopentadienyl) zirconium dichloride;
ethylidenebis(3-(2-hydroxy-ethoxy)-cyclopentadienyl) zirconium dichloride;
ethylidene(2-(2-hydroxy-ethoxy)-cyclopentadienyl)(1-indenyl) zirconium dichloride;
ethylidene(3-(2-hydroxy-ethoxy)-cyclopentadienyl)(1-indenyl) zirconium dichloride;
ethylidene(2-(2-hydroxy-ethoxy)-cyclopentadienyl)(1-(2-methyl-indenyl)) zirconium dichloride;
ethylidene(3-(2-hydroxy-ethoxy)-cyclopentadienyl)(1-(2-methyl-indenyl)) zirconium dichloride;
ethylidene(2-(2-hydroxy-ethoxy)-cyclopentadienyl)(9-fluorenyl) zirconium dichloride;
ethylidene(3-(2-hydroxy-ethoxy)-cyclopentadienyl)(9-fluorenyl) zirconium dichloride;
ethylidene(2-(2-hydroxy-ethoxy)-cyclopentadienyl)(9-(2-methyl-fluorenyl)) zirconium dichloride;
ethylidene(3-(2-hydroxy-ethoxy)-cyclopentadienyl)(9-(2-methyl-fluorenyl)) zirconium dichloride;
ethylidenebis(2-(2-hydroxy-ethyl-(dimethyl)silyl)-cyclopentadienyl) zirconium dichloride;
ethylidenebis(3-(2-hydroxy-ethyl-(dimethyl)silyl)-cyclopentadienyl) zirconium dichloride;
ethylidene(2-(2-hydroxy-ethyl-(dimethyl)silyl)-cyclopentadienyl)(1-indenyl) zirconium dichloride;
ethylidene(3-(2-hydroxy-ethyl-(dimethyl)silyl)-cyclopentadienyl)(1-indenyl) zirconium dichloride;
ethylidene(2-(2-hydroxy-ethyl-(dimethyl)silyl)-cyclopentadienyl)(1-(2-methyl-indenyl)) zirconium dichloride;
ethylidene(3-(2-hydroxy-ethyl-(dimethyl)silyl)-cyclopentadienyl)(1-(2-methyl-indenyl)) zirconium dichloride;
ethylidene(2-(2-hydroxy-ethyl-(dimethyl)silyl)-cyclopentadienyl)(9-fluorenyl) zirconium dichloride;
ethylidene(3-(2-hydroxy-ethyl-(dimethyl)silyl)-cyclopentadienyl)(9-fluorenyl) zirconium dichloride;
ethylidene(2-(2-hydroxy-ethyl-(dimethyl)silyl)-cyclopentadienyl)(9-(2-methyl-fluorenyl)) zirconium dichloride;
ethylidene(3-(2-hydroxy-ethyl-(dimethyl)silyl)-cyclopentadienyl)(9-(2-methyl-fluorenyl)) zirconium dichloride;
dimethylsilandiylbis(1-(2-(2-hydroxyethyl)-indenyl)) zirconium dichloride;
dimethylsilandiylbis(1-(3-(2-hydroxyethyl)-indenyl)) zirconium dichloride;
dimethylsilandiyl(1-(2-(2-hydroxyethyl)-indenyl))(1-indenyl) zirconium dichloride;
dimethylsilandiyl(1-(3-(2-hydroxyethyl)-indenyl))(1-indenyl) zirconium dichloride;
dimethylsilandiyl(1-(2-(2-hydroxyethyl)-indenyl))(1-(2-methyl-indenyl)) zirconium dichloride;
dimethylsilandiyl(1-(3-(2-hydroxyethyl)-indenyl))(1-(2-methyl-indenyl)) zirconium dichloride;
dimethylsilandiyl(1-(2-(2-hydroxyethyl)-indenyl))(9-fluorenyl) zirconium dichloride;
dimethylsilandiyl(1-(3-(2-hydroxyethyl)-indenyl))(9-fluorenyl) zirconium dichloride;
dimethylsilandiyl(1-(2-(2-hydroxyethyl)-indenyl))(9-(2-methyl-fluorenyl)) zirconium dichloride;
dimethylsilandiyl(1-(3-(2-hydroxyethyl)-indenyl))(9-(2-methyl-fluorenyl)) zirconium dichloride;
dimethylsilandiylbis(1-(2-(3-hydroxypropyl)-indenyl)) zirconium dichloride;
dimethylsilandiylbis(1-(3-(3-hydroxyropyl)-indenyl)) zirconium dichloride;
dimethylsilandiyl(1-(2-(3-hydroxypropyl)-indenyl))(1-indenyl) zirconium dichloride;
dimethylsilandiyl(1-(3-(3-hydroxyropyl)-indenyl))(1-indenyl) zirconium dichloride;
dimethylsilandiyl(1-(2-(3-hydroxypropyl)-indenyl))(1-(2-methyl-indenyl)) zirconium dichloride;
dimethylsilandiyl(1-(3-(3-hydroxyropyl)-indenyl))(1-(2-methyl-indenyl)) zirconium dichloride;
dimethylsilandiyl(1-(2-(3-hydroxypropyl)-indenyl))(9-fluorenyl) zirconium dichloride;
dimethylsilandiyl(1-(3-(3-hydroxyropyl)-indenyl))(9-fluorenyl) zirconium dichloride;
dimethylsilandiyl(1-(2-(3-hydroxypropyl)-indenyl))(9-(2-methyl-fluorenyl)) zirconium dichloride;
dimethylsilandiyl(1-(3-(3-hydroxyropyl)-indenyl))(9-(2-methyl-fluorenyl)) zirconium dichloride;
dimethylsilandiylbis(1-(2-(2-hydroxy-ethoxy-indenyl)) zirconium dichloride;
dimethylsilandiylbis(1-(3-(2-hydroxy-ethoxy-indenyl)) zirconium dichloride;
dimethylsilandiyl(1-(2-(2-hydroxy-ethoxy-indenyl))(1-indenyl) zirconium dichloride;
dimethylsilandiyl(1-(3-(2-hydroxy-ethoxy-indenyl))(1-indenyl) zirconium dichloride;
dimethylsilandiyl(1-(2-(2-hydroxy-ethoxy-indenyl))(1-(2-methyl-indenyl)) zirconium dichloride;
dimethylsilandiyl(1-(3-(2-hydroxy-ethoxy-indenyl))(1-(2-methyl-indenyl)) zirconium dichloride;
dimethylsilandiyl(1-(2-(2-hydroxy-ethoxy-indenyl))(9-fluorenyl) zirconium dichloride;
dimethylsilandiyl(1-(3-(2-hydroxy-ethoxy-indenyl))(9-fluorenyl) zirconium dichloride;
dimethylsilandiyl(1-(2-(2-hydroxy-ethoxy-indenyl))(9-(2-methyl-fluorenyl)) zirconium dichloride;
dimethylsilandiyl(1-(3-(2-hydroxy-ethoxy-indenyl))(9-(2-methyl-fluorenyl)) zirconium dichloride;
dimethylsilandiylbis(1-(2-(2-hydroxy-ethyl-(dimethyl)silyl-indenyl)) zirconium dichloride;
dimethylsilandiylbis(1-(3-(2-hydroxy-ethyl-(dimethyl)silyl-indenyl)) zirconium dichloride;
dimethylsilandiyl(1-(2-(2-hydroxy-ethyl-(dimethyl)silyl-indenyl))(1-indenyl) zirconium dichloride;
dimethylsilandiyl(1-(3-(2-hydroxy-ethyl-(dimethyl)silyl-indenyl))(1-indenyl) zirconium dichloride;
dimethylsilandiyl(1-(2-(2-hydroxy-ethyl-(dimethyl)silyl-indenyl))(1-(2-methyl-indenyl)) zirconium dichloride;
dimethylsilandiyl(1-(3-(2-hydroxy-ethyl-(dimethyl)silyl-indenyl))(1-(2-methyl-indenyl)) zirconium dichloride;
dimethylsilandiyl(1-(2-(2-hydroxy-ethyl-(dimethyl)silyl-indenyl))(9-fluorenyl) zirconium dichloride;
dimethylsilandiyl(1-(3-(2-hydroxy-ethyl-(dimethyl)silyl-indenyl))(9-fluorenyl) zirconium dichloride;
dimethylsilandiyl(1-(2-(2-hydroxy-ethyl-(dimethyl)silyl-indenyl))(9-(2-methyl-fluorenyl)) zirconium dichloride;
dimethylsilandiyl(1-(3-(2-hydroxy-ethyl-(dimethyl)silyl-indenyl))(9-(2-methyl-fluorenyl)) zirconium dichloride;
isopropylidenebis(1-(2-(2-hydroxyethyl)-indenyl)) zirconium dichloride;
isopropylidenebis(1-(3-(2-hydroxyethyl)-indenyl)) zirconium dichloride;
isopropylidene(1-(2-(2-hydroxyethyl)-indenyl))(1-indenyl) zirconium dichloride;
isopropylidene(1-(3-(2-hydroxyethyl)-indenyl))(1-indenyl) zirconium dichloride;
isopropylidene(1-(2-(2-hydroxyethyl)-indenyl))(1-(2-methyl-indenyl)) zirconium dichloride;
isopropylidene(1-(3-(2-hydroxyethyl)-indenyl))(1-(2-methyl-indenyl)) zirconium dichloride;
isopropylidene(1-(2-(2-hydroxyethyl)-indenyl))(9-fluorenyl) zirconium dichloride;
isopropylidene(1-(3-(2-hydroxyethyl)-indenyl))(9-fluorenyl) zirconium dichloride;
isopropylidene(1-(2-(2-hydroxyethyl)-indenyl))(9-(2-methyl-fluorenyl)) zirconium dichloride;
isopropylidene(1-(3-(2-hydroxyethyl)-indenyl))(9-(2-methyl-fluorenyl)) zirconium dichloride;
isopropylidenebis(1-(2-(3-hydroxypropyl)-indenyl)) zirconium dichloride;
isopropylidenebis(1-(3-3-hydroxyropyl-indenyl)) zirconium dichloride;
isopropylidene(1-(2-(3-hydroxypropyl)-indenyl))(1-indenyl) zirconium dichloride;
isopropylidene(1-(3-3-hydroxyropyl-indenyl))(1-indenyl) zirconium dichloride;
isopropylidene(1-(2-(3-hydroxypropyl)-indenyl))(1-(2-methyl-indenyl)) zirconium dichloride;
isopropylidene(1-(3-3-hydroxyropyl-indenyl))(1-(2-methyl-indenyl)) zirconium dichloride;
isopropylidene(1-(2-(3-hydroxypropyl)-indenyl))(9-fluorenyl) zirconium dichloride;
isopropylidene(1-(3-3-hydroxyropyl-indenyl))(9-fluorenyl) zirconium dichloride;
isopropylidene(1-(2-(3-hydroxypropyl)-indenyl))(9-(2-methyl-fluorenyl)) zirconium dichloride;
isopropylidene(1-(3-3-hydroxyropyl-indenyl))(9-(2-methyl-fluorenyl)) zirconium dichloride;
isopropylidenebis(1-(2-(2-hydroxy-ethoxy-indenyl)) zirconium dichloride;
isopropylidenebis(1-(3-(2-hydroxy-ethoxy-indenyl)) zirconium dichloride;
isopropylidene(1-(2-(2-hydroxy-ethoxy-indenyl))(1-indenyl) zirconium dichloride;
isopropylidene(1-(3-(2-hydroxy-ethoxy-indenyl))(1-indenyl) zirconium dichloride;
isopropylidene(1-(2-(2-hydroxy-ethoxy-indenyl))(1-(2-methyl-indenyl)) zirconium dichloride;
isopropylidene(1-(3-(2-hydroxy-ethoxy-indenyl))(1-(2-methyl-indenyl)) zirconium dichloride;
isopropylidene(1-(2-(2-hydroxy-ethoxy-indenyl))(9-fluorenyl) zirconium dichloride;
isopropylidene(1-(3-(2-hydroxy-ethoxy-indenyl))(9-fluorenyl) zirconium dichloride;
isopropylidene(1-(2-(2-hydroxy-ethoxy-indenyl))(9-(2-methyl-fluorenyl)) zirconium dichloride;
isopropylidene(1-(3-(2-hydroxy-ethoxy-indenyl))(9-(2-methyl-fluorenyl)) zirconium dichloride;
isopropylidenebis(1-(2-(2-hydroxy-ethyl-(dimethyl)silyl-indenyl)) zirconium dichloride;
isopropylidenebis(1-(3-(2-hydroxy-ethyl-(dimethyl)silyl-indenyl)) zirconium dichloride;
isopropylidene(1-(2-(2-hydroxy-ethyl-(dimethyl)silyl-indenyl))(1-indenyl) zirconium dichloride;
isopropylidene(1-(3-(2-hydroxy-ethyl-(dimethyl)silyl-indenyl))(1-indenyl) zirconium dichloride;
isopropylidene(1-(2-(2-hydroxy-ethyl-(dimethyl)silyl-indenyl))(1-(2-methyl-indenyl)) zirconium dichloride;
isopropylidene(1-(3-(2-hydroxy-ethyl-(dimethyl)silyl-indenyl))(1-(2-methyl-indenyl)) zirconium dichloride;
isopropylidene(1-(2-(2-hydroxy-ethyl-(dimethyl)silyl-indenyl))(9-fluorenyl) zirconium dichloride;
isopropylidene(1-(3-(2-hydroxy-ethyl-(dimethyl)silyl-indenyl))(9-fluorenyl) zirconium dichloride;
isopropylidene(1-(2-(2-hydroxy-ethyl-(dimethyl)silyl-indenyl))(9-(2-methyl-fluorenyl)) zirconium dichloride;
isopropylidene(1-(3-(2-hydroxy-ethyl-(dimethyl)silyl-indenyl))(9-(2-methyl-fluorenyl)) zirconium dichloride;
ethylidenebis(1-(2-(2-hydroxyethyl)-indenyl)) zirconium dichloride;
ethylidenebis(1-(3-(2-hydroxyethyl)-indenyl)) zirconium dichloride;
ethylidene(1-(2-(2-hydroxyethyl)-indenyl))(1-indenyl) zirconium dichloride;
ethylidene(1-(3-(2-hydroxyethyl)-indenyl))(1-indenyl) zirconium dichloride;
ethylidene(1-(2-(2-hydroxyethyl)-indenyl))(1-(2-methyl-indenyl)) zirconium dichloride;
ethylidene(1-(3-(2-hydroxyethyl)-indenyl))(1-(2-methyl-indenyl)) zirconium dichloride;
ethylidene(1-(2-(2-hydroxyethyl)-indenyl))(9-fluorenyl) zirconium dichloride;
ethylidene(1-(3-(2-hydroxyethyl)-indenyl))(9-fluorenyl) zirconium dichloride;
ethylidene(1-(2-(2-hydroxyethyl)-indenyl))(9-(2-methyl-fluorenyl)) zirconium dichloride;
ethylidene(1-(3-(2-hydroxyethyl)-indenyl))(9-(2-methyl-fluorenyl)) zirconium dichloride;
ethylidenebis(1-(2-(3-hydroxypropyl)-indenyl)) zirconium dichloride;
ethylidenebis(1-(3-3-hydroxyropyl-indenyl)) zirconium dichloride;
ethylidene(1-(2-(3-hydroxypropyl)-indenyl))(1-indenyl) zirconium dichloride;
ethylidene(1-(3-3-hydroxyropyl-indenyl))(1-indenyl) zirconium dichloride;
ethylidene(1-(2-(3-hydroxypropyl)-indenyl))(1-(2-methyl-indenyl)) zirconium dichloride;
ethylidene(1-(3-3-hydroxyropyl-indenyl))(1-(2-methyl-indenyl)) zirconium dichloride;
ethylidene(1-(2-(3-hydroxypropyl)-indenyl))(9-fluorenyl) zirconium dichloride;
ethylidene(1-(3-3-hydroxyropyl-indenyl))(9-fluorenyl) zirconium dichloride; dichloride;
ethylidenebis(1-(2-(2-hydroxy-ethoxy-indenyl)) zirconium dichloride;
ethylidenebis(1-(3-(2-hydroxy-ethoxy-indenyl)) zirconium dichloride;
ethylidene(1-(2-(2-hydroxy-ethoxy-indenyl))(1-indenyl) zirconium dichloride;
ethylidene(1-(3-(2-hydroxy-ethoxy-indenyl))(1-indenyl) zirconium dichloride;
ethylidene(1-(2-(2-hydroxy-ethoxy-indenyl))(1-(2-methyl-indenyl)) zirconium dichloride;
ethylidene(1-(3-(2-hydroxy-ethoxy-indenyl))(1-(2-methyl-indenyl)) zirconium dichloride;
ethylidene(1-(2-(2-hydroxy-ethoxy-indenyl))(9-fluorenyl) zirconium dichloride;
ethylidene(1-(3-(2-hydroxy-ethoxy-indenyl))(9-fluorenyl) zirconium dichloride;
ethylidene(1-(2-(2-hydroxy-ethoxy-indenyl))(9-(2-methyl-fluorenyl)) zirconium dichloride;
ethylidene(1-(3-(2-hydroxy-ethoxy-indenyl))(9-(2-methyl-fluorenyl)) zirconium dichloride;
ethylidenebis(1-(2-(2-hydroxy-ethyl-(dimethyl)silyl-indenyl)) zirconium dichloride;
ethylidenebis(1-(3-(2-hydroxy-ethyl-(dimethyl)silyl-indenyl)) zirconium dichloride;
ethylidene(1-(2-(2-hydroxy-ethyl-(dimethyl)silyl-indenyl))(1-indenyl) zirconium dichloride;
ethylidene(1-(3-(2-hydroxy-ethyl-(dimethyl)silyl-indenyl))(1-indenyl) zirconium dichloride;
ethylidene(1-(2-(2-hydroxy-ethyl-(dimethyl)silyl-indenyl))(1-(2-methyl-indenyl)) zirconium dichloride;
ethylidene(1-(3-(2-hydroxy-ethyl-(dimethyl)silyl-indenyl))(1-(2-methyl-indenyl)) zirconium dichloride;
ethylidene(1-(2-(2-hydroxy-ethyl-(dimethyl)silyl-indenyl))(9-fluorenyl) zirconium dichloride;
ethylidene(1-(3-(2-hydroxy-ethyl-(dimethyl)silyl-indenyl))(9-fluorenyl) zirconium dichloride;
ethylidene(1-(2-(2-hydroxy-ethyl-(dimethyl)silyl-indenyl))(9-(2-methyl-fluorenyl)) zirconium dichloride;
ethylidene(1-(3-(2-hydroxy-ethyl-(dimethyl)silyl-indenyl))(9-(2-methyl-fluorenyl)) zirconium dichloride;
dimethylsilylenebis(9-(1-(2-hydroxyethyl)-fluorenyl)) zirconium dichloride;
dimethylsilylene(9-(1-(2-hydroxyethyl)-fluorenyl))(cyclopentadienyl) zirconium dichloride;
dimethylsilylene(9-(1-(2-hydroxyethyl)-fluorenyl))(1-(2-methyl-indenyl)) zirconium dichloride;
dimethylsilylene(9-(1-(2-hydroxyethyl)-fluorenyl))(1-indenyl) zirconium dichloride;
dimethylsilylene(9-(1-(2-hydroxyethyl)-fluorenyl))(9-(2-methyl-fluorenyl)) zirconium dichloride;
dimethylsilylenebis(9-(1-(3-hydroxyropyl)- fluorenyl)) zirconium dichloride;
dimethylsilylene(9-(1-(3-hydroxyropyl)-fluorenyl))(9-fluorenyl) zirconium dichloride;
dimethylsilylene(9-(1-(3-hydroxyropyl)-fluorenyl))(1-(2-methyl-indenyl)) zirconium dichloride;
dimethylsilylene(9-(1-(3-hydroxyropyl)-fluorenyl))(1-indenyl) zirconium dichloride;
dimethylsilylene(9-(1-(3-hydroxyropyl)-fluorenyl))(9-(2-methyl-fluorenyl)) zirconium dichloride;
dimethylsilylenebis(9-(1-(2-hydroxy-ethoxy)-fluorenyl)) zirconium dichloride;
dimethylsilylene(9-(1-(2-hydroxy-ethoxy)-fluorenyl))(9-fluorenyl) zirconium dichloride;
dimethylsilylene(9-(1-(2-hydroxy-ethoxy)-fluorenyl))(1-(2-methyl-indenyl)) zirconium dichloride;
dimethylsilylene(9-(1-(2-hydroxy-ethoxy)-fluorenyl))(1-indenyl) zirconium dichloride;
dimethylsilylene(9-(1-(2-hydroxy-ethoxy)-fluorenyl))(9-(2-methyl-fluorenyl)) zirconium dichloride;
dimethylsilylenebis(9-(1-(2-hydroxy-ethyl-(dimethyl)silyl-fluorenyl)) zirconium dichloride;
dimethylsilylene(9-(1-(2-hydroxy-ethyl-(dimethyl)silyl-fluorenyl))(9-fluorenyl) zirconium dichloride;
dimethylsilylene(9-(1-(2-hydroxy-ethyl-(dimethyl)silyl-fluorenyl))(1-(2-methyl-indenyl)) zirconium dichloride;
dimethylsilylene(9-(1-(2-hydroxy-ethyl-(dimethyl)silyl-fluorenyl))(1-indenyl) zirconium dichloride;
dimethylsilylene(9-(1-(2-hydroxy-ethyl-(dimethyl)silyl-fluorenyl))(9-(2-methyl-fluorenyl)) zirconium dichloride;
isopropylidenebis(9-(1-(2-hydroxyethyl)-fluorenyl)) zirconium dichloride;
isopropylidene(9-(1-(2-hydroxyethyl)-fluorenyl))(9-fluorenyl) zirconium dichloride;
isopropylidene(9-(1-(2-hydroxyethyl)-fluorenyl))(1-(2-methyl-indenyl)) zirconium dichloride;
isopropylidene(9-(1-(2-hydroxyethyl)-fluorenyl))(1-indenyl) zirconium dichloride;
isopropylidene(9-(1-(2-hydroxyethyl)-fluorenyl))(9-(2-methyl-fluorenyl)) zirconium dichloride;
isopropylidenebis(9-(1-(3-hydroxyropyl)-fluorenyl)) zirconium dichloride;
isopropylidene(9-(1-(3-hydroxyropyl)-fluorenyl))(9-fluorenyl) zirconium dichloride;
isopropylidene(9-(1-(3-hydroxyropyl)-fluorenyl))(1-(2-methyl-indenyl)) zirconium dichloride;
isopropylidene(9-(1-(3-hydroxyropyl)-fluorenyl))(1-indenyl) zirconium dichloride;
isopropylidene(9-(1-(3-hydroxyropyl)-fluorenyl))(9-(2-methyl-fluorenyl)) zirconium dichloride;
isopropylidenebis(9-(1-(2-hydroxy-ethoxy)-fluorenyl)) zirconium dichloride;
isopropylidene(9-(1-(2-hydroxy-ethoxy)-fluorenyl))(9-fluorenyl) zirconium dichloride;
isopropylidene(9-(1-(2-hydroxy-ethoxy)-fluorenyl))(1-(2-methyl-indenyl)) zirconium dichloride;
isopropylidene(9-(1-(2-hydroxy-ethoxy)-fluorenyl))(1-indenyl) zirconium dichloride;
isopropylidene(9-(1-(2-hydroxy-ethoxy)-fluorenyl))(9-(2-methyl-fluorenyl)) zirconium dichloride;
isopropylidenebis(9-(1-(2-hydroxy-ethyl-(dimethyl)silyl-fluorenyl)) zirconium dichloride;
isopropylidene(9-(1-(2-hydroxy-ethyl-(dimethyl)silyl-fluorenyl))(9-fluorenyl) zirconium dichloride;
isopropylidene(9-(1-(2-hydroxy-ethyl-(dimethyl)silyl-fluorenyl))(1-(2-methyl-indenyl)) zirconium dichloride;
isopropylidene(9-(1-2-hydroxy-ethyl-(dimethyl)silyl-fluorenyl))(1-indenyl) zirconium dichloride;
isopropylidene(9-(1-2-hydroxy-ethyl-(dimethyl)silyl-fluorenyl))(9-(2-methyl-fluorenyl)) zirconium dichloride;
ethylidenebis(9-(1-(2-hydroxyethyl-fluorenyl)) zirconium dichloride;
ethylidene(9-(1-(2-hydroxyethyl-fluorenyl))(9-fluorenyl) zirconium dichloride;
ethylidene(9-(1-(2-hydroxyethyl-fluorenyl))(1-(2-methyl-indenyl)) zirconium dichloride;
ethylidene(9-(1-(2-hydroxyethyl-fluorenyl))(1-indenyl) zirconium dichloride;
ethylidene(9-(1-(2-hydroxyethyl-fluorenyl))(9-(2-methyl-fluorenyl)) zirconium dichloride;
ethylidenebis(9-(1-(3-hydroxyropyl-fluorenyl)) zirconium dichloride;
ethylidene(9-(1-(3-hydroxyropyl-fluorenyl))(9-fluorenyl) zirconium dichloride;
ethylidene(9-(1-(3-hydroxyropyl-fluorenyl))(1-(2-methyl-indenyl)) zirconium dichloride;
ethylidene(9-(1-(3-hydroxyropyl-fluorenyl))(1-indenyl) zirconium dichloride;
ethylidene(9-(1-(3-hydroxyropyl-fluorenyl))(9-(2-methyl-fluorenyl)) zirconium dichloride;
ethylidenebis(9-(1-(2-hydroxy-ethoxy-fluorenyl)) zirconium dichloride;
ethylidene(9-(1-(2-hydroxy-ethoxy-fluorenyl))(9-fluorenyl) zirconium dichloride;
ethylidene(9-(1-(2-hydroxy-ethoxy-fluorenyl))(1-(2-methyl-indenyl)) zirconium dichloride;
ethylidene(9-(1-(2-hydroxy-ethoxy-fluorenyl))(1-indenyl) zirconium dichloride;
ethylidene(9-(1-(2-hydroxy-ethoxy-fluorenyl))(9-(2-methyl-fluorenyl)) zirconium dichloride;
ethylidenebis(9-(1-(2-hydroxy-ethyl-(dimethyl)silyl-fluorenyl)) zirconium dichloride;
ethylidene(9-(1-(2-hydroxy-ethyl-(dimethyl)silyl-fluorenyl))(9-fluorenyl) zirconium dichloride;
ethylidene(9-(1-(2-hydroxy-ethyl-(dimethyl)silyl-fluorenyl))(1-(2-methyl-indenyl)) zirconium dichloride;
ethylidene(9-(1-(2-hydroxy-ethyl-(dimethyl)silyl-fluorenyl))(1-indenyl) zirconium dichloride;
ethylidene(9-(1-(2-hydroxy-ethyl-(dimethyl)silyl-fluorenyl))(9-(2-methyl-fluorenyl)) zirconium dichloride;
2-hydroxyethyl(methyl)silandiylbis(cyclopentadienyl) zirconium dichloride;
2-hydroxyethyl(methyl)silandiylbis(9-fluorenyl) zirconium dichloride;
2-hydroxyethyl(methyl)silandiyl(cyclopentadienyl)(1-indenyl) zirconium dichloride;
2-hydroxyethyl(methyl)silandiyl(cyclopentadienyl)(1-(2-methyl-indenyl)) zirconium dichloride;
2-hydroxyethyl(methyl)silandiyl(cyclopentadienyl)(9-fluorenyl) zirconium dichloride;
2-hydroxyethyl(methyl)silndiyl(cyclopentadienyl)(9-(2-methyl-fluorenyl)) zirconium dichloride;
2-hydroxyethyl(methyl)silandiylbis(1-indenyl) zirconium dichloride;
2-hydroxyethyl(methyl)silandiyl(cyclopentadienyl)(1-(2-methylbenzoindenyl)) zirconium dichloride;
2-hydroxyethyl(methyl)silandiylbis(1-(2-methylbenzoindenyl)) zirconium dichloride;
3-hydroxyropyl(methyl)silandiylbis(cyclopentadienyl) zirconium dichloride;
3-hydroxyropyl(methyl)silandiylbis(9-fluorenyl) zirconium dichloride;
3-hydroxyropyl(methyl)silandiyl(cyclopentadienyl)(1-indenyl) zirconium dichloride;
3-hydroxyropyl(methyl)silandiyl(cyclopentadienyl)(1-(2-methyl-indenyl)) zirconium dichloride;
3-hydroxyropyl(methyl)silandiyl(cyclopentadienyl)(9-fluorenyl) zirconium dichloride;
3-hydroxyropyl(methyl)silandiyl(cyclopentadienyl)(9-(2-methyl-fluorenyl)) zirconium dichloride;
3-hydroxyropyl(methyl)silandiylbis(1-indenyl) zirconium dichloride;
3-hydroxyropyl(methyl)silandiyl(cyclopentadienyl)(1-(2-methylbenzoindenyl)) zirconium dichloride;
2-hydroxy-ethoxy(methyl)silandiylbis(cyclopentadienyl) zirconium dichloride;
2-hydroxy-ethoxy(methyl)silandiyl(cyclopentadienyl)(1-indenyl) zirconium dichloride;
2-hydroxy-ethoxy(methyl)silandiyl(cyclopentadienyl)(1-(2-methyl-indenyl)) zirconium dichloride;
2-hydroxy-ethoxy(methyl)silandiyl(cyclopentadienyl)(9-fluorenyl) zirconium dichloride;
2-hydroxy-ethoxy(methyl)silandiyl(cyclopentadienyl)(9-(2-methyl-fluorenyl)) zirconium dichloride;
2-hydroxy-ethyl-(dimethyl)silyl-(methyl)silandiylbis(cyclopentadienyl) zirconium dichloride;
2-hydroxy-ethyl-(dimethyl)silyl-(methyl)silandiyl(cyclopentadienyl)(1-indenyl) zirconium dichloride;
2-hydroxy-ethyl-(dimethyl)silyl-(methyl)silandiyl(cyclopentadienyl)(1-(2-methyl-indenyl)) zirconium dichloride;
2-hydroxy-ethyl-(dimethyl)silyl-(methyl)silandiyl(cyclopentadienyl)(9-fluorenyl) zirconium dichloride;
2-hydroxy-ethyl-(dimethyl)silyl-(methyl)silandiyl(cyclopentadienyl)(9-(2-methyl-fluorenyl)) zirconium dichloride;
2-hydroxy-ethoxy-(methyl)methylidenebis(cyclopentadienyl) zirconium dichloride;
2-hydroxy-ethoxy-(methyl)methylidene(cyclopentadienyl)(1-indenyl) zirconium dichloride;
2-hydroxy-ethoxy-(methyl)methylidene(cyclopentadienyl)(1-(2-methyl-indenyl)) zirconium dichloride;
2-hydroxy-ethoxy-(methyl)methylidene(cyclopentadienyl)(9-fluorenyl) zirconium dichloride;
2-hydroxy-ethoxy-(methyl)methylidene(cyclopentadienyl)(9-(2-methyl-fluorenyl)) zirconium dichloride;
2-hydroxy-ethyl-(dimethyl)silyl-(methyl)methylidenebis(cyclopentadienyl) zirconium dichloride;
2-hydroxy-ethyl-(dimethyl)silyl-(methyl)methylidene(cyclopentadienyl)(1-indenyl) zirconium dichloride;
2-hydroxy-ethyl-(dimethyl)silyl-(methyl)methylidene(cyclopentadienyl)(1-(2-methyl-indenyl)) zirconium dichloride;
2-hydroxy-ethyl-(dimethyl)silyl-(methyl)methylidene(cyclopentadienyl)(9-fluorenyl) zirconium dichloride;
2-hydroxy-ethyl-(dimethyl)silyl-(methyl)methylidene(cyclopentadienyl)(9-(2-methyl-fluorenyl)) zirconium dichloride;
2-hydroxy-ethyl-(dimethyl)silyl-(methyl)methylidenebis(1-indenyl) zirconium dichloride;
1-(2-hydroxyethyl)-ethylidenebis(cyclopentadienyl) zirconium dichloride;
1-(2-hydroxyethyl)-ethylidene-1-(cyclopentadienyl)-2-(1-indenyl) zirconium dichloride;
1-(2-hydroxyethyl)-ethylidene-1-(cyclopentadienyl)-2-(1-(2-methyl-indenyl)) zirconium dichloride;
1-(2-hydroxyethyl)-ethylidene-1-(cyclopentadienyl)-2-(9-fluorenyl) zirconium dichloride;
1-(2-hydroxyethyl)-ethylidene-1-(cyclopentadienyl)-2-(9-(2-methyl-fluorenyl)) zirconium dichloride;
1-(2-hydroxyethyl)-ethylidenebis(1-indenyl) zirconium dichloride;
1-(3-hydroxypropyl)-ethylidenebis(cyclopentadienyl) zirconium dichloride;
1-(3-hydroxypropyl)-ethylidene-1-(cyclopentadienyl)-2-(1-indenyl) zirconium dichloride;
1-(3-hydroxypropyl)-ethylidene-1-(cyclopentadienyl)-2-(1-(2-methyl-indenyl)) zirconium dichloride;
1-(3-hydroxypropyl)-ethylidene-1-(cyclopentadienyl)-2-(9-fluorenyl) zirconium dichloride;
1-(3-hydroxypropyl)-ethylidene-1-(cyclopentadienyl)-2-(9-(2-methyl-fluorenyl)) zirconium dichloride;
1-(3-hydroxypropyl)-ethylidenebis(1-indenyl) zirconium dichloride;
1-(2-hydroxyethoxy)-ethylidenebis(cyclopentadienyl) zirconium dichloride;
1-(2-hydroxyethoxy)-ethylidene-1-(cyclopentadienyl)-2-(1-indenyl) zirconium dichloride;
1-(2-hydroxyethoxy)-ethylidene-1-(cyclopentadienyl)-2-(1-(2-methyl-indenyl)) zirconium dichloride;
1-(2-hydroxyethoxy)-ethylidene-1-(cyclopentadienyl)-2-(9-fluorenyl) zirconium dichloride;
1-(2-hydroxyethoxy)-ethylidene-1-(cyclopentadienyl)-2-(9-(2-methyl-fluorenyl)) zirconium dichloride;
1-(2-hydroxyethyl)-(dimethyl)silyl ethylidenebis(cyclopentadienyl) zirconium dichloride;
1-(2-hydroxyethyl)-(dimethyl)silyl ethylidene-1-(cyclopentadienyl)-2-(1-indenyl) zirconium dichloride;
1-(2-hydroxyethyl)-(dimethyl)silyl ethylidene-1-(cyclopentadienyl)-2-(1-(2-methyl-indenyl)) zirconium dichloride
1-(2-hydroxyethyl)-(dimethyl)silyl ethylidene-1-(cyclopentadienyl)-2-(9-fluorenyl) zirconium dichloride;
1-(2-hydroxyethyl)-(dimethyl)silyl ethylidene-1-(cyclopentadienyl)-2-(9-(2-methyl-fluorenyl)) zirconium dichloride;
(2-hydroxyethyl)(methyl)silandiyl-(tertbutylamido)(cylopentadienyl) titanium dichloride;
(2-hydroxyethyl)(methyl)silandiyl-(tertbutylamido)(tetramethylcylopentadienyl) titanium dichloride;
(2-hydroxyethyl)(methyl)silandiyl-(tertbutylamido)(1-indenyl) titanium dichloride;
(2-hydroxyethyl)(methyl)silandiyl-(tertbutylamido)(1-(2-methyl-indenyl)) titanium dichloride;
(2-hydroxyethyl)(methyl)silandiyl-(tertbutylamido)(9-fluorenyl) titanium dichloride;
(2-hydroxyethyl)(methyl)silandiyl-(tertbutylamido)(9-(2-methyl-fluorenyl)) titanium dichloride;
(2-hydroxyethyl)(methyl)silandiyl-(tertbutylamido)(1-(2-metthylbenzoindenyl) titanium dichloride;
(dimethyl)silandiyl-(tertbutylamido)(3-((2-hydroxyethyl)cylopentadienyl) titanium dichloride;
(dimethyl)silandiyl-(tertbutylamido)(1-(3-(2-hydroxyethyl)indenyl) titanium dichloride;
(dimethyl)silandiyl-(2-(2-hydroxyethyl)amido)(cylopentadienyl) titanium dichloride;
(dimethyl)silandiyl-(2-(2-hydroxyethyl)amido)(tetramethylcylopentadienyl) titanium dichloride;
(dimethyl)silandiyl-(2-(2-hydroxyethyl)amido)(1-indenyl) titanium dichloride;
(dimethyl)silandiyl-(2-(2-hydroxyethyl)amido)(9-fluorenyl) titanium dichloride;
(dimethyl)silandiyl-(2-(2-hydroxyethyl)amido)(1-(2-methylbenzoindenyl) titanium dichloride;
(3-hydroxypropyl)(methyl)silandiyl(tertbutylamido)-(cylopentadienyl) titanium dichloride;
(3-hydroxypropyl)(methyl)silandiyl-(tertbutylamido)(tetramethylcyclopentadienyl) titanium dichloride;
(3-hydroxypropyl)(methyl)silandiyl-(tertbutylamido)(1-indenyl) titanium dichloride;
(3-hydroxypropyl)(methyl)silandiyl-(tertbutylamido)(1-(2-methyl-indenyl)) titanium dichloride;
(3-hydroxypropyl)(methyl)silandiyl-(tertbutylamido)(9-fluorenyl) titanium dichloride;
(3-hydroxypropyl)(methyl)silandiyl-(tertbutylamido)(9-(2-methyl-fluorenyl)) titanium dichloride;
(3-hydroxypropyl)(methyl)silandiyl(tertbutylamido)-(1-(2-methylbenzoindenyl) titanium dichloride;
(dimethyl)silandiyl-(tertbutylamido)(3-((3-hydroxypropyl)cylopentadienyl) titanium dichloride;
(dimethyl)silandiyl-(tertbutylamido)(1-(3-(3-hydroxypropyl)indenyl) titanium dichloride;
(dimethyl)silandiyl-(3-(3-hydroxypropyl)amido)(cylopentadienyl) titanium dichloride;
(dimethyl)silandiyl-(3-(3-hydroxypropyl)amido)(tetramethylcylopentadienyl) titanium dichloride;
(dimethyl)silandiyl-(3-(3-hydroxypropyl)amido)(1-indenyl) titanium dichloride;
(dimethyl)silandiyl-(3-(3-hydroxypropyl)amido)(9-fluorenyl) titanium dichloride;
(dimethyl)silandiyl-(3-(3-hydroxypropyl)amido)(1-(2-methylbenzoindenyl) titanium dichloride;
2-hydroxyethyl-methoxy (methyl)silandiyl-(tertbutylamido)(cylopentadienyl) titanium dichloride;
2-hydroxyethyl-methoxy(methyl)silandiyl-(tertbutylamido)(tetramethylcyclopentadienyl) titanium dichloride;
2-hydroxyethyl-methoxy(methyl)silandiyl-(tertbutylamido)(1-indenyl) titanium dichloride;
2-hydroxyethyl-methoxy(methyl)silandiyl-(tertbutylamido)(1-(2-methyl-indenyl)) titanium dichloride;
2-hydroxyethyl-methoxy(methyl)silandiyl-(tertbutylamido)(9-fluorenyl) titanium dichloride;
2-hydroxyethyl-methoxy(methyl)silandiyl-(tertbutylamido)(9-(2-methyl-fluorenyl)) titanium dichloride;
(2-hydroxyethoxy)(methyl)silandiyl-(tertbutylamido)(cylopentadienyl) titanium dichloride;
(2-hydroxyethoxy)(methyl)silandiyl-(tertbutylamido)(tetramethylcyclopentadienyl) titanium dichloride;
(2-hydroxyethoxy)(methyl)silandiyl-(tertbutylamido)(1-indenyl) titanium dichloride;
(2-hydroxyethoxy)(methyl)silandiyl-(tertbutylamido)(1-(2-methyl-indenyl)) titanium dichloride;
(2-hydroxyethoxy)(methyl)silandiyl-(tertbutylamido)(9-fluorenyl) titanium dichloride;
(2-hydroxyethoxy)(methyl)silandiyl-(tertbutylamido)(9-(2-methyl-fluorenyl)) titanium dichloride;
(2-hydroxyethyl)-(dimethyl)silyl-(methyl)silandiyl(tertbutylamido)-(cylopentadienyl) titanium dichloride;
(2-hydroxyethyl)-(dimethyl)silyl-(methyl) silandiyl(tertbutylamido)(tetramethylcyclopentadienyl) titanium dichloride;
(2-hydroxyethyl)-(dimethyl)silyl-(methyl)silandiyl-(tertbutylamido)(1-indenyl) titanium dichloride;
(2-hydroxyethyl)-(dimethyl)silyl-(methyl)silandiyl-(tertbutylamido)(1-(2-methyl-indenyl)) titanium dichloride;
(2-hydroxyethyl)-(dimethyl)silyl-(methyl)silandiyl-(tertbutylamido)(9-fluorenyl) titanium dichloride;
(2-hydroxyethyl)-(dimethyl)silyl-(methyl)silandiyl-(tertbutylamido)(9-(2-methyl-fluorenyl)) titanium dichloride;
(2-hydroxyethyl)-(methyl)methylene(tertbutylamido)(cylopentadienyl) titanium dichloride;
(2-hydroxyethyl)-(methyl)methylene(tertbutylamido)(tetramethylcyclopentadienyl) titanium dichloride;
(2-hydroxyethyl)-(methyl)methylene(tertbutylamido)(1-indenyl) titanium dichloride;
(2-hydroxyethyl)-(methyl)methylene(tertbutylamido)(1-(2-methyl-indenyl)) titanium dichloride;
(2-hydroxyethyl)-(methyl)methylene(tertbutylamido)(9-fluorenyl) titanium dichloride;
(2-hydroxyethyl)-(methyl)methylene(tertbutylamido)(9-(2-methyl-fluorenyl)) titanium dichloride;
(3-hydroxypropyl)-(methyl)methylene(tertbutylamido)(cylopentadienyl) titanium dichloride;
(3-hydroxypropyl)-(methyl)methylene(tertbutylamido)(tetramethylcyclopentadienyl) titanium dichloride;
(3-hydroxypropyl)-(methyl)methylene(tertbutylamido)(indenyl) titanium dichloride;
(3-hydroxypropyl)-(methyl)methylene(tertbutylamido)(2-methyl-indenyl) titanium dichloride;
(3-hydroxypropyl)-(methyl)methylene(tertbutylamido)(9-fluorenyl) titanium dichloride;
(3-hydroxypropyl)-(methyl)methylene(tertbutylamido)(2-methyl-fluorenyl) titanium dichloride;
2-hydroxyethyl-methoxy(methyl)methylene(tertbutylamido)(cylopentadienyl) titanium dichloride;
2-hydroxyethyl-methoxy(methyl)methylene(tertbutylamido)(tetramethylcyclopentadienyl) titanium dichloride;
2-hydroxyethyl-methoxy(methyl)methylen(tertbutylamido)(1-indenyl) titanium dichloride;
2-hydroxyethyl-methoxy(methyl)methylen(-tertbutylamido)(1-(2-methyl-indenyl)) titanium dichloride;
2-hydroxyethyl-methoxy(methyl)methylen(-tertbutylamido)(9-fluorenyl) titanium dichloride;
2-hydroxyethyl-methoxy(methyl)methylen(-tertbutylamido)(9-(2-methyl-fluorenyl)) titanium dichloride;
(2-hydroxyethoxy)-(methyl)methylene(tertbutylamido)(cylopentadienyl) titanium dichloride;
(2-hydroxyethoxy)-(methyl)methylene(tertbutylamido)(tetramethylcyclopentadienyl) titanium dichloride;
(2-hydroxyethoxy)-(methyl)methylen(tertbutylamido)(1-indenyl) titanium dichloride;
(2-hydroxyethoxy)-(methyl)methylen(tertbutylamido)(1-(2-methyl-indenyl)) titanium dichloride;
(2-hydroxyethoxy)-(methyl)methylen(tertbutylamido)(9-fluorenyl) titanium dichloride;
(2-hydroxyethoxy)-(methyl)methylen(tertbutylamido)(9-(2-methyl-fluorenyl)) titanium dichloride;
(2-hydroxyethyl)-(dimethyl)silyl-(methyl)methylene(tertbutylamido)(cylopentadienyl) titanium dichloride;
(2-hydroxyethyl)-(dimethyl)silyl (methyl) methylene (tertbutylamido) (tetramethylcyclopentadienyl) titanium dichloride;
(2-hydroxyethyl)-(dimethyl)silyl-(methyl)methilene(tertbutylamido)(1-indenyl) titanium dichloride;
(2-hydroxyethyl)-(dimethyl)silyl-(methyl)methilene(tertbutylamido)(1-(2-methyl-indenyl)) titanium dichloride;
(2-hydroxyethyl)-(dimethyl)silyl-(methyl)methilene(tertbutylamido)(9-fluorenyl) titanium dichloride;
(2-hydroxyethyl)-(dimethyl)silyl-(methyl)methilene(tertbutylamido)(9-(2-methyl-fluorenyl)) titanium dichloride;
(2-hydroxyethyl)(methyl) silandiyl-oxo(cylopentadienyl) titanium dichloride;
(2-hydroxyethyl)(methyl) silandiyl-oxo-(tetramethylcyclopentadienyl) titanium dichloride;
(2-hydroxyethyl)(methyl) silandiyl-oxo(1-indenyl) titanium dichloride;
(2-hydroxyethyl)(methyl) silandiyl-oxo(1-(2-methyl-indenyl)) titanium dichloride;
(2-hydroxyethyl)(methyl) silandiyl-oxo(9-fluorenyl) titanium dichloride;
(2-hydroxyethyl)(methyl) silandiyl-oxo(9-(2-methyl-fluorenyl)) titanium dichloride;
(3-hydroxypropyl)(methyl) silandiyl-oxo(cylopentadienyl) titanium dichloride;
(3-hydroxypropyl)(methyl) silandiyl-oxo(tetramethylcyclopentadienyl) titanium dichloride;
(3-hydroxypropyl)(methyl) silandiyl-oxo(1-indenyl) titanium dichloride;
(3-hydroxypropyl)(methyl) silandiyl-oxo(1-(2-methyl-indenyl)) titanium dichloride;
(3-hydroxypropyl)(methyl) silandiyl-oxo(9-fluorenyl) titanium dichloride;
(3-hydroxypropyl)(methyl) silandiyl-oxo(9-(2-methyl-fluorenyl)) titanium dichloride;
2-hydroxyethyl-methoxy(methyl) silandiyl- oxo(cylopentadienyl) titanium dichloride;
2-hydroxyethyl-methoxy(methyl) silandiyl-oxo(tetramethylcyclopentadienyl) titanium dichloride;
2-hydroxyethyl-methoxy(methyl) silandiyl-oxo(1-indenyl) titanium dichloride;
2-hydroxyethyl-methoxy(methyl) silandiyl-oxo(1-(2-methyl-indenyl)) titanium dichloride;
2-hydroxyethyl-methoxy(methyl) silandiyl-oxo(9-fluorenyl) titanium dichloride;
2-hydroxyethyl-methoxy(methyl) silandiyl-oxo(9-(2-methyl-fluorenyl)) titanium dichloride;
(2-hydroxyethoxy)(methyl) silandiyl-oxo(cylopentadienyl) titanium dichloride;
(2-hydroxyethoxy)(methyl) silandiyl-oxo(tetramethylcyclopentadienyl) titanium dichloride;
(2-hydroxyethoxy)(methyl) silandiyl-oxo(1-indenyl) titanium dichloride;
(2-hydroxyethoxy)(methyl) silandiyl-oxo(1-(2-methyl-indenyl)) titanium dichloride;
(2-hydroxyethoxy)(methyl) silandiyl-oxo(9-fluorenyl) titanium dichloride;
(2-hydroxyethoxy)(methyl) silandiyl-oxo(9-(2-methyl-fluorenyl)) titanium dichloride;
(2-hydroxyethyl)-(dimethyl)silyl-(methyl) silandiyl-oxo(cylopentadienyl) titanium dichloride;
(2-hydroxyethyl)-(dimethyl)silyl-(methyl) silandiyl-oxo(tetramethylcyclopentadienyl) titanium dichloride;
(2-hydroxyethyl)-(dimethyl)silyl-(methyl) silandiyl-oxo(1-indenyl) titanium dichloride;
(2-hydroxyethyl)-(dimethyl)silyl-(methyl) silandiyl-oxo(1-(2-methyl-indenyl)) titanium dichloride;
(2-hydroxyethyl)-(dimethyl)silyl-(methyl) silandiyl-oxo(fluorenyl) titanium dichloride;
(2-hydroxyethyl)-(dimethyl)silyl-(methyl) silandiyl-oxo(9-methylfluorenyl) titanium dichloride
(2-hydroxyethyl)(methyl)silandiyl-(tertbutylamido)(cylopentadienyl) zirconium dichloride;
(2-hydroxyethyl)(methyl)silandiyl-(tertbutylamido)(tetramethylcylopentadienyl) zirconium dichloride;
(2-hydroxyethyl)(methyl)silandiyl-(tertbutylamido)(1-indenyl) zirconium dichloride;
(2-hydroxyethyl)(methyl)silandiyl-(tertbutylamido)(1-(2-methyl-indenyl)) zirconium dichloride;
(2-hydroxyethyl)(methyl)silandiyl-(tertbutylamido)(9-fluorenyl) zirconium dichloride;
(2-hydroxyethyl)(methyl)silandiyl-(tertbutylamido)(9-(2-methyl-fluorenyl)) zirconium dichloride;
(2-hydroxyethyl)(methyl)silandiyl-(tertbutylamido)(1-(2-metthylbenzoindenyl) zirconium dichloride;
(dimethyl)silandiyl-(tertbutylamido)(3-((2-hydroxyethyl)cylopentadienyl) zirconium dichloride;
(dimethyl)silandiyl-(tertbutylamido)(1-(3-(2-hydroxyethyl)indenyl) zirconium dichloride;
(dimethyl)silandiyl-(2-(2-hydroxyethyl)amido)(cylopentadienyl) zirconium dichloride;
(dimethyl)silandiyl-(2-(2-hydroxyethyl)amido)(tetramethylcylopentadienyl) zirconium dichloride;
(dimethyl)silandiyl-(2-(2-hydroxyethyl)amido)(1-indenyl) zirconium dichloride;
(dimethyl)silandiyl-(2-(2-hydroxyethyl)amido)(9-fluorenyl) zirconium dichloride;
(dimethyl)silandiyl-(2-(2-hydroxyethyl)amido)(1-(2-methylbenzoindenyl) zirconium dichloride;
(3-hydroxypropyl)(methyl)silandiyl(tertbutylamido)-(cylopentadienyl) zirconium dichloride;
(3-hydroxypropyl)(methyl)silandiyl-(tertbutylamido)(tetramethylcyclopentadienyl) zirconium dichloride;
(3-hydroxypropyl)(methyl)silandiyl-(tertbutylamido)(1-indenyl) zirconium dichloride;
(3-hydroxypropyl)(methyl)silandiyl-(tertbutylamido)(1-(2-methyl-indenyl)) zirconium dichloride;
(3-hydroxypropyl)(methyl)silandiyl-(tertbutylamido)(9-fluorenyl) zirconium dichloride;
(3-hydroxypropyl)(methyl)silandiyl-(tertbutylamido)(9-(2-methyl-fluorenyl)) zirconium dichloride;
(3-hydroxypropyl)(methyl)silandiyl(tertbutylamido)-(1-(2-methylbenzoindenyl) zirconium dichloride;
(dimethyl)silandiyl-(tertbutylamido)(3-((3-hydroxypropyl)cylopentadienyl) zirconium dichloride;
(dimethyl)silandiyl-(tertbutylamido)(1-(3-(3-hydroxypropyl)indenyl) zirconium dichloride;
(dimethyl)silandiyl-(3-(3-hydroxypropyl)amido)(cylopentadienyl) zirconium dichloride;
(dimethyl)silandiyl-(3-(3-hydroxypropyl)amido)(tetramethylcylopentadienyl) zirconium dichloride;
(dimethyl)silandiyl-(3-(3-hydroxypropyl)amido)(1-indenyl) zirconium dichloride;
(dimethyl)silandiyl-(3-(3-hydroxypropyl)amido)(9-fluorenyl) zirconium dichloride;
(dimethyl)silandiyl-(3-(3-hydroxypropyl)amido)(1-(2-methylbenzoindenyl) zirconium dichloride;
2-hydroxyethyl-methoxy (methyl)silandiyl-(tertbutylamido)(cylopentadienyl) zirconium dichloride;
2-hydroxyethyl-methoxy(methyl)silandiyl-(tertbutylamido)(tetramethylcyclopentadienyl) zirconium dichloride;
2-hydroxyethyl-methoxy(methyl)silandiyl-(tertbutylamido)(1-indenyl) zirconium dichloride;
2-hydroxyethyl-methoxy(methyl)silandiyl-(tertbutylamido)(1-(2-methyl-indenyl)) zirconium dichloride;
2-hydroxyethyl-methoxy(methyl)silandiyl-(tertbutylamido)(9-fluorenyl) zirconium dichloride;
2-hydroxyethyl-methoxy(methyl)silandiyl-(tertbutylamido)(9-(2-methyl-fluorenyl)) zirconium dichloride;
(2-hydroxyethoxy)(methyl)silandiyl-(tertbutylamido)(cylopentadienyl) zirconium dichloride;
(2-hydroxyethoxy)(methyl)silandiyl-(tertbutylamido)(tetramethylcyclopentadienyl) zirconium dichloride;
(2-hydroxyethoxy)(methyl)silandiyl-(tertbutylamido)(1-indenyl) zirconium dichloride;
(2-hydroxyethoxy)(methyl)silandiyl-(tertbutylamido)(1-(2-methyl-indenyl)) zirconium dichloride;
(2-hydroxyethoxy)(methyl)silandiyl-(tertbutylamido)(9-fluorenyl) zirconium dichloride;
(2-hydroxyethoxy)(methyl)silandiyl-(tertbutylamido)(9-(2-methyl-fluorenyl)) zirconium dichloride;
(2-hydroxyethyl)-(dimethyl)silyl-(methyl)silandiyl(tertbutylamido)-(cylopentadienyl) zirconium dichloride;
(2-hydroxyethyl)-(dimethyl)silyl-(methyl) silandiyl(tertbutylamido)(tetramethylcyclopentadienyl) zirconium dichloride;
(2-hydroxyethyl)-(dimethyl)silyl-(methyl)silandiyl-(tertbutylamido)(1-indenyl) zirconium dichloride;
(2-hydroxyethyl)-(dimethyl)silyl-(methyl)silandiyl-(tertbutylamido)(1-(2-methyl-indenyl)) zirconium dichloride;
(2-hydroxyethyl)-(dimethyl)silyl-(methyl)silandiyl-(tertbutylamido)(9-fluorenyl) zirconium dichloride;
(2-hydroxyethyl)-(dimethyl)silyl-(methyl)silandiyl-(tertbutylamido)(9-(2-methyl-fluorenyl)) zirconium dichloride;
(2-hydroxyethyl)-(methyl)methylene(tertbutylamido)(cylopentadienyl) zirconium dichloride;
(2-hydroxyethyl)-(methyl)methylene(tertbutylamido)(tetramethylcyclopentadienyl) zirconium dichloride;
(2-hydroxyethyl)-(methyl)methylene(tertbutylamido)(1-indenyl) zirconium dichloride;
(2-hydroxyethyl)-(methyl)methylene(tertbutylamido)(1-(2-methyl-indenyl)) zirconium dichloride;
(2-hydroxyethyl)-(methyl)methylene(tertbutylamido)(9-fluorenyl) zirconium dichloride;
(2-hydroxyethyl)-(methyl)methylene(tertbutylamido)(9-(2-methyl-fluorenyl)) zirconium dichloride;
(3-hydroxypropyl)-(methyl)methylene(tertbutylamido)(cylopentadienyl) zirconium dichloride;
(3-hydroxypropyl)-(methyl)methylene(tertbutylamido)(tetramethylcyclopentadienyl) zirconium dichloride;
(3-hydroxypropyl)-(methyl)methylene(tertbutylamido)(indenyl) zirconium dichloride;
(3-hydroxypropyl)-(methyl)methylene(tertbutylamido)(2-methyl-indenyl) zirconium dichloride;
(3-hydroxypropyl)-(methyl)methylene(tertbutylamido)(9-fluorenyl) zirconium dichloride;
(3-hydroxypropyl)-(methyl)methylene(tertbutylamido)(2-methyl-fluorenyl) zirconium dichloride;
2-hydroxyethyl-methoxy(methyl)methylene(tertbutylamido)(cylopentadienyl) zirconium dichloride;
2-hydroxyethyl-methoxy(methyl)methylene(tertbutylamido)(tetramethylcyclopentadienyl) zirconium dichloride;
2-hydroxyethyl-methoxy(methyl)methylen(tertbutylamido)(1-indenyl) zirconium dichloride;
2-hydroxyethyl-methoxy(methyl)methylen(-tertbutylamido)(1-(2-methyl-indenyl)) zirconium dichloride;
2-hydroxyethyl-methoxy(methyl)methylen(-tertbutylamido)(9-fluorenyl) zirconium dichloride;
2-hydroxyethyl-methoxy(methyl)methylen(-tertbutylamido)(9-(2-methyl-fluorenyl)) zirconium dichloride;
(2-hydroxyethoxy)-(methyl)methylene(tertbutylamido)(cylopentadienyl) zirconium dichloride;
(2-hydroxyethoxy)-(methyl)methylene(tertbutylamido)(tetramethylcyclopentadienyl) zirconium dichloride;
(2-hydroxyethoxy)-(methyl)methylen(tertbutylamido)(1-indenyl) zirconium dichloride;
(2-hydroxyethoxy)-(methyl)methylen(tertbutylamido)(1-(2-methyl-indenyl)) zirconium dichloride;
(2-hydroxyethoxy)-(methyl)methylen(tertbutylamido)(9-fluorenyl) zirconium dichloride;
(2-hydroxyethoxy)-(methyl)methylen(tertbutylamido)(9-(2-methyl-fluorenyl)) zirconium dichloride;
(2-hydroxyethyl)-(dimethyl)silyl-(methyl)methylene(tertbutylamido)(cylopentadienyl) zirconium dichloride;
(2-hydroxyethyl)-(dimethyl)silyl (methyl) methylene (tertbutylamido) (tetramethylcyclopentadienyl) zirconium dichloride;
(2-hydroxyethyl)-(dimethyl)silyl-(methyl)methilene(tertbutylamido)(1-indenyl) zirconium dichloride;
(2-hydroxyethyl)-(dimethyl)silyl-(methyl)methilene(tertbutylamido)(1-(2-methyl-indenyl)) zirconium dichloride;
(2-hydroxyethyl)-(dimethyl)silyl-(methyl)methilene(tertbutylamido)(9-fluorenyl) zirconium dichloride;
(2-hydroxyethyl)-(dimethyl)silyl-(methyl)methilene(tertbutylamido)(9-(2-methyl-fluorenyl)) zirconium dichloride;
(2-hydroxyethyl)(methyl) silandiyl-oxo(cylopentadienyl) zirconium dichloride;
(2-hydroxyethyl)(methyl) silandiyl-oxo-(tetramethylcyclopentadienyl) zirconium dichloride;
(2-hydroxyethyl)(methyl) silandiyl-oxo(1-indenyl) zirconium dichloride;
(2-hydroxyethyl)(methyl) silandiyl-oxo(1-(2-methyl-indenyl)) zirconium dichloride;
(2-hydroxyethyl)(methyl) silandiyl-oxo(9-fluorenyl) zirconium dichloride;
(2-hydroxyethyl)(methyl) silandiyl-oxo(9-(2-methyl-fluorenyl)) zirconium dichloride;
(3-hydroxypropyl)(methyl) silandiyl-oxo(cylopentadienyl) zirconium dichloride;
(3-hydroxypropyl)(methyl) silandiyl-oxo(tetramethylcyclopentadienyl) zirconium dichloride;
(3-hydroxypropyl)(methyl) silandiyl-oxo(1-indenyl) zirconium dichloride;
(3-hydroxypropyl)(methyl) silandiyl-oxo(1-(2-methyl-indenyl)) zirconium dichloride;
(3-hydroxypropyl)(methyl) silandiyl-oxo(9-fluorenyl) zirconium dichloride;
(3-hydroxypropyl)(methyl) silandiyl-oxo(9-(2-methyl-fluorenyl)) zirconium dichloride;
2-hydroxyethyl-methoxy(methyl) silandiyl- oxo(cylopentadienyl) zirconium dichloride;
2-hydroxyethyl-methoxy(methyl) silandiyl-oxo(tetramethylcyclopentadienyl) zirconium dichloride;
2-hydroxyethyl-methoxy(methyl) silandiyl-oxo(1-indenyl) zirconium dichloride;
2-hydroxyethyl-methoxy(methyl) silandiyl-oxo(1-(2-methyl-indenyl)) zirconium dichloride;
2-hydroxyethyl-methoxy(methyl) silandiyl-oxo(9-fluorenyl) zirconium dichloride;
2-hydroxyethyl-methoxy(methyl) silandiyl-oxo(9-(2-methyl-fluorenyl)) zirconium dichloride;
(2-hydroxyethoxy)(methyl) silandiyl-oxo(cylopentadienyl) zirconium dichloride;
(2-hydroxyethoxy)(methyl) silandiyl-oxo(tetramethylcyclopentadienyl) zirconium dichloride;
(2-hydroxyethoxy)(methyl) silandiyl-oxo(1-indenyl) zirconium dichloride;
(2-hydroxyethoxy)(methyl) silandiyl-oxo(1-(2-methyl-indenyl)) zirconium dichloride;
(2-hydroxyethoxy)(methyl) silandiyl-oxo(9-fluorenyl) zirconium dichloride;
(2-hydroxyethoxy)(methyl) silandiyl-oxo(9-(2-methyl-fluorenyl)) zirconium dichloride;
(2-hydroxyethyl)-(dimethyl)silyl-(methyl) silandiyl-oxo(cylopentadienyl) zirconium dichloride;
(2-hydroxyethyl)-(dimethyl)silyl-(methyl) silandiyl-oxo(tetramethylcyclopentadienyl) zirconium dichloride;
(2-hydroxyethyl)-(dimethyl)silyl-(methyl) silandiyl-oxo(1-indenyl) zirconium dichloride;
(2-hydroxyethyl)-(dimethyl)silyl-(methyl) silandiyl-oxo(1-(2-methyl-indenyl)) zirconium dichloride;
(2-hydroxyethyl)-(dimethyl)silyl-(methyl) silandiyl-oxo(fluorenyl) zirconium dichloride;
(2-hydroxyethyl)-(dimethyl)silyl-(methyl) silandiyl-oxo(9-methylfluorenyl) zirconium dichloride
ethylidene(1-(3-(3-hydroxypropyl)-indenyl))(cyclopentadienyl) zirconium dichloride;
ethylidene(1-(3-(2-hydroxyethyl)-indenyl))(cyclopentadienyl) zirconium dichloride;
dimethylsilandiyl(1-(3-(2-hydroxyethyl)-indenyl))(cyclopentadienyl) zirconium dichloride;
dimethylsilandiyl(1-(3-(3-hydroxypropyl)-indenyl)) (cyclopentadienil) zirconium dichloride;
isopropylidene(1-(3-(2-hydroxyethyl)-indenyl))(cyclopentadienyl) zirconium dichloride;
isopropylidene(1-(3-(3-hydroxypropyl)-indenyl(cyclopentadienyl) zirconium dichloride;

The metallocene complexes belonging to the general formula I can be prepared through reaction of a compound of general formula [(LR_{k-f}(R^{I}OJ)_{f})]M', wherein M' is an alkali metal, preferably Li, Na or K and J is a protective group that masks the OH group, with a transition metal compound of general formula (LRₖ)_{z}MXₙ(E)_{q}, wherein E is a linear or cyclic ether, q is a number ranging from 0 to 4 and n is an integer number ranging from 2 to 4 and L, R, k, z and X have been already defined.

The metallocene complexes belonging to the general formulas II and III can be prepared through reaction of a transition metal compound of general formula MXₙ(E)_{q}, wherein E is a linear or cyclic ether, q is a number between 0 and 4 and n is 3 or 4, with another compound of general formula 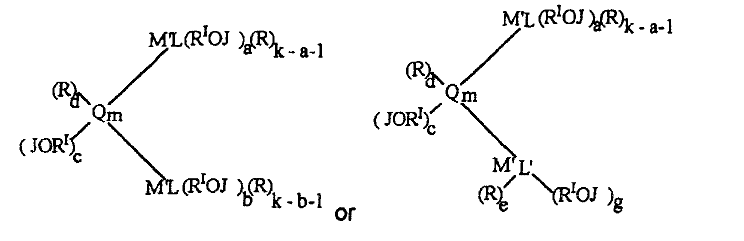 wherein M' is an alkali metal, preferably Li, Na or K and J is a protective group that masks the OH group, for example it is a SiR^{II}₃ or another protective group known in the art. Preferred transition metal compounds of formula MXₙ(E)_{q} are TiCl₄, ZrCl_{4,} HfCl₄, TiCl₃, TiCl₃• 2THF.

The reaction between the transition metal compound and the alkali metal derivative is preferably realized in a dry nitrogen atmosphere, by using anhydrous solvents such as linear or cyclic ethers (for example diethylether, tetrahydrofurane or dioxane), or aromatic hydrocarbons such as toluene.

The group O-J is then cleaved by a fit reaction. For example, when the protective group J is SiR^{II}₃, the de-protection reaction can be an hydrolysis reaction carried out in acidic medium; preferably the hydrolysis reaction is made with silica.

Metallocenes containing a O-SiR^{II}₃ group can be prepared according to the method disclosed in EP 97500068.6.

The compounds of formula I, II or III can be supported on a proper support. Any type of inorganic porous support can be used, for example inorganic oxides, such as: silica, alumina, silica alumina, aluminium phosphates and mixtures thereof. In a preferred embodiment the inorganic porous support has an alumoxane present onto its surface.

The alumoxane can be introduced onto the support by any method known in the art. For example the alumoxane can be deposited onto the surface of the inorganic support by dissolving the alumoxane into a suitable solvent and adding the inorganic support into the solution, or it can be deposited onto the surface of the porous support by precipitation of the alumoxane in the presence of the support.

It is also possible to prepare the alumoxane directly on the surface of the porous support by reacting an aluminum alkyl with the hydration water present onto the support surface.

A method that can be fit for preparing supported catalysts according to this invention consists in the impregnation, under anhydrous conditions and inert atmosphere, of the solution of any metallocene of formula I, II or III, or a mixture thereof, on the supporting material at a proper temperature, preferably between -20° C and 90 °C. The supported catalyst that contains the metallocene can be obtained through filtration and washing with a proper solvent, preferably an aliphatic or aromatic hydrocarbon without polar groups.

Another method that can properly be used consists in depositing the metallocene on the support by using a solution of the compound that has to be heterogenised, eliminating the solvent through evaporation and then warming the solid residue at a temperature between 25 and 150° C. Besides, the resulting residue, obtained by this process, can be subjected to washing and subsequent filtration.

Another method that can be fit for preparing supported catalysts according to this invention consists in reacting a metallocene compound of formula I, II or III with aluminoxane or trialkylaluminum in a non polar solvent at a temperature between -20 and 150° C.

A clear advantage of this method is that it is possible to obtain catalyst system wherein the metallocene is homogeneously distributed in the solid.

An advantageous aspect of this invention is that the fixation method, as a consequence of the reaction of groups OH with reactive groups of the support surface, prevents the desorption of the supported metallocene complexes. This type of interaction represents the main difference between the organo-complexes heterogeneisation mechanism and other conventional methods, where the metallocene complex generally remains physisorbed on the support surface.

Supported metallocene complexes of formula I , II, III can be used in the presence of a cocatalyst for olefins polymerization or copolymerization, either in solution or suspension process.

When X is an halogen, OR^{II} or N(R^{II})₂ the preferred cocatalysts are alkylaluminoxane, especially methylaluminoxane compounds, and trilakylaluminum, when X is hydrogen or alkyl the preferred cocatalysts is a Lewis acid such as boron derivatives for example B(C₆F₅)₃. In addition mixtures of both aluminoxane and boron derivatives or alkylaluminium and boron derivatives can be used as cocatalysts.

When the support contains an aluminoxane on its surface, it is possible to use the supported metallocene according to the invention without adding a cocatalyst However the addition of a small amount of trialkylaluminium helps obtaining higher yields. This fact constitutes a further dear advantage in view of most polymerization processes which require large amounts of aluminoxane.

The most proper polymerization procedure can change according to the chosen type of polymerization process (suspension, gas phase, solution or in bulk).

For the polymerization in suspension, the cocatalyst can previously be mixed with the supported solid catalyst, can be added to the polymerization medium before the supported catalyst, or both operations can be sequentially realized.

The process consists in putting in contact the monomer, or, in certain cases, the monomer and the comonomer, with a catalytic composition according to the present invention, that includes at least one supported metallocene complex of formula I, II or III, at a proper temperature and pressure.

Suitable olefins that can be used as comonomers to obtain ethylene copolymers are α-olefins such as propylene, butene, hexene, octene, 4-methyl-1-pentene and cyclic olefins and can be used in proportions from 0.1 to 70% by weight of the total of the monomers. In the case of homopolymerization of ethylene, the density of polymers ranges between 0.950 and 0.970 g/cm³; in the case of copolymerization of ethylene, the density is as low as 0.900 g/cm³.

To control the molecular weight of the obtained polymers, hydrogen can optionally be used as chain transfer agent in such proportions that the hydrogen partial pressure, with respect to the olefin one, be from 0.01 to 50%.

In the particular case of the polymerization technique known as suspension process or controlled particle morphology process, the used temperature will be between 30° and 100 °C, the same which is typically used in gas phase.

The used pressure changes according to the polymerization technique; it ranges from atmospheric pressure to 350 MPa.

The following examples are described in order to better understand the invention. The materials, the chemical compounds and the conditions used in these examples are illustrative and do not limit the scope of the invention.

### EXAMPLES

### Example 1. Synthesis of (cyclopentadienyl)((2-hydroxy-ethyl)-cyclopentadienyl) zirconium dichloride

### a) Preparation of 1-trimethylsiloxy 2-bromo-ethane

To 125 g (888 mmol) of 2-bromo-ethanol, 95 ml (1450 mmol) of hexamethyldisilazane are slowly added at 0° C. Ammonia evolution is immediately observed. The reaction is maintained under stirring for 12 hours and a colorless oil is obtained. (168.8 g, 856 mmol. Yield:96%) ¹H-NMR (CDCl3): 3.66 (t,2H), 3.40 (t,2H), 0.14 (s,9H).

### b) Preparation of (2-trimethylsiloxy-ethyl)-cyclopentadiene

150 ml of a 2.3 M sodium cyclopentadienylide solution in tetrahydrofurane (346 mmol) is slowly added to a solution of 68.2 g (346 mmol) 2-trimethylsiloxy-1-bromo-ethane in tetrahydrofurane. The immediate formation of a pinkish solid is observed. The reaction is maintained under stirring for 12 hours. Then, an ammonium chloride aqueous solution is added. The organic phase is extracted, dried with magnesium sulphate and the volatile part is distilled under vacuum, obtaining an orange oil. This oil is distilled in order to obtain a colorless oil. (Tb.: 63-65° C, 0.02 bar). (40.3 g, 221 mmol. Yield:64%). ¹H-NMR (CDCI3): 6.50-6.00 (m,3H), 3.75 (m,2H), 2.95 (m,2H), 2.65 (m,2H), 0.15 (s,9H).

### c) Preparation of potassium (2-trimethylsiloxy-ethyl)-cyclopentadienylide

To a suspension of 0.5 g (12.4 mmol) of potassium hydride in tetrahydrofurane, 2.25 g (12.4 mmol) of (2-trimethylsiloxy-ethyl)-cyclopentadiene in tetrahydrofurane is added. The reaction is maintained under stirring for 2 hours and then the volatile compounds are eliminated, leaving an oily solid which is washed with hexane in order to obtain a brown solid. (2.2 g Yield: 81%)

### d) Preparation of (cyclopentadienyl) ((2-trimethylsiloxy-ethyl)-cyclopentadienyl) zirconium dichloride

To a suspension of 3.52 g (10 mmol) of an adduct of cyclopentadienyl zirconium trichloride with dimethoxyethane in toluene, a suspension of 2.2 g (10 mmol) of potassium (2-trimethylsiloxy-ethyl)-cyclopentadienylide in toluene is added. The addition is realized at -78° C. An orange-brown suspension is immediately formed; it is maintained under stirring for 12 hours; then it is left settling and it is filtered. The obtained orange solution is concentrated up to 5 ml and hexane is added, so that a brown solid is obtained. (1.1 g, 2.7 mmol. Yield: 27%). ¹H-NMR: 6.00 (t,2H), 5.87 (s,5H), 5.67 (t,2H), 3.66 (t,2H), 2.92 (t,2H), 0.11 (s,9H). Mass spectrum. M⁺-65: (343): 33%.

### e) Preparation of (cyclopentadienyl)((2-hydroxy-ethyl)-cyclopentadienyl) zirconium dichloride

2.16 g (5.69 mmol) of the organocomplex (cyclopentadienyl)(trimethylsiloxyethyl-cyclopentadienyl) zirconium dichloride was added to a suspension of 2.9 g of Silica XPO 2407 in 75 ml of dry toluene at room temperature.
It was necessary only to add the solid sample and it dissolved and the suspension immediately acquired a greenish-yellow color. The sample was maintained under continuous stirring at room temperature for 48 hours.
The yellow solution was separated from the solid by filtration. The solution was brought to dryness and, after washing with three fractions of 15 ml of hexane, a dusty white solid was obtained. (0.57 g Yield: 30%) ¹H-NMR (Cl₃CD): 1.65 (m,1H), 2.95 (t,2H), 4.05 (m,2H), 6.32 (m,2H), 6.35 (m,2H), 6.5 (s,5H).

### Example 2. Synthesis of (cyclopentadienyl)((3-hydroxy-propyl)-cyclopentadienyl) zirconium dichloride

### a) Preparation of 1- trimethylsiloxy-3-bromo-propane

To 12.2 g (76 mmol) of hexamethyldisilazane, 21 g (151 mmol) of 3-bromo-1-propanol is added. Ammonia evolution is immediately observed. The reaction is maintained under stirring for 2 hours and 24.5 g (148 mmol) of the desired compound is finally obtained. Yield: 98%. ¹H-NMR (CDCI3): 3.74 (t,2H), 3.55 (t,2H), 2.09 (m,2H), 0.14 (s,9H).

### b) Preparation of (3-trimethylsiloxy-propyl)-cyclopentadiene

To 50 ml of a 2.3 M solution of sodium cyclopentadienylide (115 mmol), a solution of 24.3 g (115 mmol) of 3-trimethylsiloxy-1-bromo-propane in tetrahydrofurane is added.

The quick formation of a pinkish solid is observed. The reaction is maintained under stirring for 12 hours and then it is neutralized with an ammonium chloride solution; the organic phase is extracted and concentrated to dryness in order to give an orange oil. (9.8 g, 50 mmol. Yield: 43%). ¹H-NMR (CDCI3): 6.47-6.00 (m,3H), 3.62 (m,2H), 2.95 (m,1H), 2.87 (m,1H), 2.43 (m,2H), 1.80 (m,2H), 0.17 (s,9H).

### c) Preparation of potassium (3-trimethylsiloxy-propyl)-cyclopentadienylide

To a suspension of 0.4 g (10 mmol) of potassium hydride in tetrahydrofurane, 1.96 g (10 mmol) of a (3-trimethylsiloxy-propyl)-cyclopentadiene in tetrahydrofurane is added. The reaction is maintained under stirring for 2 hours. Subsequently, the resulting suspension is concentrated to dryness, leaving an oily solid that, when it is washed with hexane, gives a cream-colored solid. (1.6 g, 7 mmol. Yield:70%).

### d) Preparation of (cyclopentadienyl)((3-trimethylsiloxy)-propyl-cyclopentadienyl) zirconium dichloride

To a suspension of 2.46 g (7 mmol) of cyclopentadienyl zirconium trichloride in toluene, a suspension of 1.6 g (7 mmol) of potassium (3-trimethylsiloxy)-propyl-cyclopentadienylide in toluene is added. A yellow-brown-colored suspension immediately precipitates. The reaction is maintained for 12 hours. Subsequently, the solution is filtered and concentrated and a crystalline white solid is formed (0.8 g, 2 mmol, 28%). ¹H-NMR (C6D6): 5.87 (t,2H), 5.65 (t,2H), 3.46 (m,2H), 2.74 (m,2H), 1.73 (m,2H), 0.14 (s,9H). ¹³C-NMR (C6D6): 116.9, 115.0, 114.7, 112.2, 61.8, 33.6, 26.8, -0.393. Mass spectrum: M⁺-65(356): 30%.

### e) Preparation of (cyclopentadienyl)((3-hydroxy-propyl)-cyclopentadienyl) zirconium dichloride

0.5 g (1.18 mmol) of (cyclopentadienyl)(trimethylsiloxypropyl-cyclopentadienyl) zirconium dichloride was added to a suspension of 1.1 g of Silica XPO 2407 in 75 ml of dry toluene at room temperature.
It was necessary only to add the solid sample and it dissolved and the suspension immediately acquired a greenish-yellow color. The sample was maintained under continuous magnetic stirring at room temperature for two days. Then it was filtered, separating the solution from the insoluble product. The resulting colorless solution was brought to dryness. In this way it was possible to isolate a dusty white solid product. (0.16 g Yield: 39%) ¹H-NMR (Cl₃CD): 1.45 (m, 1H), 1.87 (t,2H), 2.72 (t,2H), 3.80 (t,2H), 6.10 (m,2H), 6.28 (m,2H), 6.28 (m,2H), 6.45 (s,5H). Mass spectrum: M⁺-36.45:(312):55%.

### Example 3. Heterogenization of (cyclopentadienyl)((3-hydroxy-propyl)-cyclopentadienyl) zirconium dichloride on silica functionalized with MAO

5 g of silica Witco WMSPQ functionalized with MAO with 24% of Aluminium were weighed in a 250 ml Schlenk. The solid was suspended in 100 ml of dry toluene.

0.11 g (0.31 mmol) of the zirconium compound were added to the above described suspension. The addition was realized at room temperature and the reaction mixture was maintained under continuous stirring. From the beginning of the reaction the solution acquired a yellow color and no changes were observed during the following two hours.

At the end of the reaction the yellow suspension was transferred to a filtering plate and it was washed with about 500 ml of toluene at room temperature. The obtained dusty cream product was then dried under vacuum for 24 hours.

The aluminium and zirconium content in the sample determined by X rays fluorescence was: 0.49% of Zr and 22.1% of Al.

### Example 4. Heterogenization of (cyclopentadienyl)((3-hydroxy-ethyl)-cyclopentadienyl) zirconium dichloride on silica functionalized with trimethylaluminum TMA

5 g of silica functionalized with TMA with a content in Al, determined by X rays fluorescence, of 4.1 % were weighed in a 250 ml Schlenk. The sample was suspended in 100 ml of dry toluene.

0.076 g of cyclopentadienyl ((2-hydroxy-ethyl)-cyclopentadienyl) zirconium dichloride(0.2 mmol) was added to the above described suspension. The addition was realized at room temperature and the reaction mixture was maintained under continuous stirring for 12 hours.

At the end of that time the suspension was transferred to a filtering plate and the yellow solid was washed with about 500 ml of toluene at room temperature. The washed solid was then maintained under vacuum for 24 hours.

The content of zirconium in the sample determined by fluorescence of X rays was 0.35% by weight.

### Example 5. Reaction of (cyclopentadienyl)((2-hydroxy-ethyl)-cyclopentadienyl) zirconium dichloride with methylalumoxane (MAO)

A solution of 0.21 g (0.59 mmol) of (cyclopentadienyl)((2-hydroxy-ethyl)-cyclopentadienyl) zirconium dichloride was added to another solution of 25 ml of MAO (0.037 moles of Al), at room temperature, in 20 ml of toluene.

The reaction mixture was left at that same temperature for 2 hours and no significant change was observed. The solution was then brought to dryness and an oily residue was obtained. After washing twice with two fractions of 20 ml of hexane an orange solid residue is obtained; the solid is then dried under vacuum.

The content of aluminium and zirconium in the sample determined by fluorescence of X rays was: 2.78% of Zr and 32.3% of Al.

### Example 6. Reaction of (cyclopentadienyl)((2-hydroxy-ethyl)-cyclopentadienyl) zirconium dichloride with TMA

3.90 ml (3.23 mmol) of TMA was added to a suspension of 0.36 g (1.07 mmol) of (cyclopentadienyl)((2-hydroxy-ethyl)-cyclopentadienyl) zirconium dichloride in 25 ml of dry toluene. The addition was realized drop by drop from an addition funnel at room temperature and it was immediately observed methane evolution.

Then the solution became turbid and it was observed the formation of a white product.

The reaction mixture was left for 12 hours at room temperature. The solution was separated from the white product by filtration under inert atmosphere on a porous plate. Then the solid residue was dried under vacuum for 12 hours. At the end (cyclopentadienyl) ((2-dimethylaluminoxi-ethyl)-cyclopentadienyl)] zirconium methylchloride was isolated as a dusty white solid insoluble in aliphatic solvents. (0.27 g Yield: 70%) ¹H-NMR: (THF d8): -0.6 (s,6H), 0.30 (s,3H), 2.7 (m,1H), 2.9 (bs,1H), 4.75 (bs, 1H), 5.1 (bs, 1H), 6.05 (bs,2H), 6.15 (bs,sH), Mass spectrum: M⁺-73.05:(298):40%

### Polymerization tests with cyclopentadienyl [(hydroxypropyl- cyclopentadienyl)] zirconium dichloride on silica functionalized with MAO

### General conditions for the polymerization of ethylene

The ethylene polymerization reactions were carried out in a reactor Buchi of the capacity of 1 liter under anhydrous conditions. The reactor, charged with 600 ml of dry and degassed heptane, was conditioned at 70°C. Before pressurizing the reactor with ethylene it was injected the cocatalyst at a pressure of 1 atmosphere. Then the reactor was pressurized up to 3.75 atmospheres. At the end the catalyst was injected by using 0.25 atmospheres of superpression of ethylene. The polymerization reactions were maintained in these conditions of pressure (4 atmospheres) and temperature (70°C). The suspension was stirred at 1.200 rpm for fifteen or thirty minutes.

### Example 7. Polymerization of ethylene

In the reactor it was injected 2 ml (3 mmol of Al) of MAO from a solution of 10% of aluminium in toluene, commercialized by Witco. To this solution it was added 0.1 g of the catalyst (cyclopentadienyl)((3-hydroxy-propyl-)-cyclopentadienyl) zirconium dichloride (5.4 µmol of Zr) on silica functionalized with MAO, prepared according to the description of example 3. The polymerization reaction was maintained at a temperature of 70°C and an ethylene pressure of 4 atmospheres for 15 minutes. At the end of the reaction the medium pressure was rapidly reduced and the reaction was completed by adding acidified methanol. It was obtained 14.3 g of polymer with Mn=47,600 Mw= 188,000, Mw/Mn 3,95 (Activity: 3.24 E06 g PE/(mol Zr*hr*atm)).

### Example 8. Polymerization of ethylene

In the polymerization reactor it was injected 2 ml (4.46 mmol of Al) of a TIBA solution (1.34 M in heptane). To this solution it was added 0.1 g of the catalyst (cyclopentadienyl) ((3-hydroxy-propyl)-cyclopentadienyl) zirconium dichloride supported on silica functionalized with MAO, prepared according the description of example 3 (5.4 mmol of Zr). The polymerization reaction was maintained at a temperature of 70°C and an ethylene pressure of 4 atmospheres for 15 minutes. When the reaction was finished, the pressure was rapidly reduced and acidified methanol was added to the medium. It was obtained 4 g of polyethylene with: Mv = 205.363, Mn =66,300 Mw = 221,200 Mw/Mn = 3,34 (Activity: 3.24 E06 g PE/(mol Zr*hr*atm)).

### Example 9. Polymerization of ethylene

In the polymerization reactor it was injected 0.10 g of the catalyst (cyclopentadienyl)((3-hydroxy-propyl)-cyclopentadienyl) zirconium dichloride (5.4 mmol of Zr) supported on silica functionalized with MAO, prepared according the description of example 3. The polymerization reaction was maintained at a temperature of 70°C and an ethylene pressure of 4 atmospheres for 15 minutes. When the reaction was finished, the pressure was rapidly reduced and acidified methanol was added to the medium. It was obtained 1.2 g of polyethylene with: Mv = 302.405, Mn =58,400 Mw = 273,900 Mw/Mn = 4,64 (Activity: 0.27 E06 g PE/(mol Zr*hr*atm)).

### Example 10. Copolymerization of ethylene with 1-hexene

In the reactor it was injected 10 ml of 1-hexene (24.2% of comonomer in the feedstock) and 2 ml of a MAO solution of (10% by weight of aluminium 3 mmol of Al). To this solution it was added 0.1 g of the catalyst (cyclopentadienyl)(3-hydroxy-propyl) cyclopentadienyl) zirconium dichloride (5.4 µmol of Zr) supported on silica functionalized with MAO, prepared according to the description in example 3. The polymerization reaction was maintained at a temperature of 70°C and an ethylene pressure of 4 atmospheres for 15 minutes. At the end of the reaction the pressure was rapidly reduced and the reaction was completed by adding acidified methanol. It was obtained 3.8 g of copolymer with 1.14% of hexene in the copolymer, Mn= 119,400 Mw= 297,800 Mw/Mn= 2,49 (Activity: 0.89 g PE/(mol Zr*hr*atm)).

### Example 11. Copolymerization of ethylene with 1-hexene

The copolymerization reaction was realized by following the same proceeding described in example 10, but with the difference that it was used 2 ml of a TIBA solution in heptane (1.34 M in total aluminium)instead of the MAO solution. After 15 minutes of polymerization it was obtained 2.3 g of polymer with: Mn = 59,300 Mw = 167,400 Mw/Mn = 2,82 (0.53 E06 g PE/mol Zr*hr*atm). The content in 1-hexene in the copolymer, determined by ¹³C-NMR, was 1.15 molar distributed at random.

### Example 12. Copolymerization of ethylene with 1-hexene

The copolymerization reaction was realized by following the same proceeding described in example 10, but with the difference that no MAO solution was added. After 15 minutes of polymerization it was obtained 0.25 g of polymer (0.15 E06 g PE/mol Zr*hr*atm). The content in 1-hexene in the copolymer, determined by ¹³C-NMR, was 0.94 molar distributed at random.

### Example 13. Copolymerization of ethylene with 1-hexene

The copolymerization reaction was realized by following the same proceeding described in example 10, but with the difference that once the solvent was added and before pressurizing the reactor, it was injected 20 ml of dry 1-hexene recently distilled (39% of hexene in the feedstock). It was used 1 ml of a solution of MAO in toluene (1.5 M of total aluminium) and 0.1 g of catalyst. After 15 minutes of polymerization it was obtained 4.2 g of polymer (0.9 E06 g PE/mol Zr*hr*atm). The content in 1-hexene in the copolymer, determined by ¹³C-NMR, was ... molar distributed at random.

### Example 14. Copolymerization of ethylene with 1-hexene

The copolymerization reaction was realized by following the same proceeding described in example 13, but with the difference that it was used 2 ml of a TIBA solution in heptane (1.34 M of total aluminium) instead of the MAO solution. After 15 minutes of polymerization it was obtained 2.8 g of polymer with: Mv = 127.209, Mn =48,700 Mw = 154,300 Mw/Mn = 3,17 (0.56 E06 g PE/mol Zr*hr*atm). The content in 1-hexene in the copolymer, determined by ¹³C-NMR, was 2.3 molar distributed at random.

### Example 15. Copolymerization of ethylene with 1-hexene

The copolymerization reaction was realized by following the same procedure described in example 13, but with the difference that no MAO solution was added. After 15 minutes of polymerization it was obtained 0.1 g of polymer with: Mv = 302.415... (0.8 E05 g PE/mol Zr*hr*atm). The content in 1-hexene in the copolymer, determined by ¹³C-NMR, was ... molar distributed at random.

### Polymerization tests with (cyclopentadienyl) ((2-hydroxy-ethyl)-cyclopentadienyl) zirconium dichloride reacted with MAO

### Example 16. Polymerization of ethylene

The polymerization reaction was realized by following the proceeding described in example 7. In the polymerization reactor it was injected 2 ml (3 mmol of Al) of MAO extracted from a solution 1.5 M in toluene. To this solution it was added 0.04 g of the catalyst (cyclopentadienyl)((2-hydroxy-ethyl)- cyclopentadienyl) zirconium dichloride, according to the description of example 5 (0.12 µmol of Zr). The polymerization reaction was maintained at a temperature of 70°C and an ethylene pressure of 4 atmospheres for 15 minutes. At the end of the reaction, the pressure was rapidly reduced and acidified methanol was added to the medium. It was obtained 7.6 g of polyethylene with Mv = 186.839, Mn = 65,700 Mw = 218,200 Mw/Mn = 3,32 (Activity: 0.47 E06 g PE/ (mol Zr*hr*atm)).

### Example 17. Polymerization of ethylene

The polymerization reaction was realized by following the procedure described in example 7. In the polymerization reactor it was injected 3 ml of TIBA solution 1.35 M in heptane. To this solution it was added 0.04 g of the catalyst (cyclopentadienyl)((2-hydroxy-ethyl)- cyclopentadienyl) zirconium dichloride reacted with MAO, prepared according to the description of example 5 (0.12 µmol of Zr). The polymerization reaction was maintained at a temperature of 70°C and an ethylene pressure of 4 atmospheres for 15 minutes. At the end of the reaction, the pressure was rapidly reduced and acidified methanol was added to the medium. It was obtained 1.7 g of polyethylene with Mn = 67,500 Mw = 241,000 Mw/Mn = 3,57 (Activity: 0.16 E06 g PE/ (mol Zr*hr*atm)).

### Polymerization tests with (cyclopentadienyl)((2-dimethylaluminoxi-ethyl)-cyclopentadienyl) zirconium methylchloride

### Example 18. Polymerization of ethylene

The polymerization reaction was realized by following the proceeding described in example 7. In the polymerization reactor it was injected 2 ml of MAO solution (1.5 M aluminium in toluene). To this solution it was added 0.012 g of the (cyclopentadienyl)((2-dimethylaluminoxi-ethyl)-cyclopentadienyl) zirconium methylchloride, prepared according to the description of example 6 (0.30 µmol of Zr). The polymerization reaction was maintained at a temperature of 70°C and an ethylene pressure of 4 atmospheres for 15 minutes. At the end of the reaction, the pressure was rapidly reduced and acidified methanol was added to the medium. It was obtained 6.1 g of polyethylene (Activity: 0.20 E06 g PE/ (mol Zr*hr*atm)).

### Example 19. Polymerization of ethylene

The polymerization reaction was realized by following the procedure described in example 7. In the polymerization reactor it was injected 3 ml of TIBA solution (1.35 M in heptane). To this solution it was added 0.100 g of the (cyclopentadienyl)((2-dimethylaluminoxi-ethyl)- cyclopentadienyl) zirconium methylchloride, prepared according to the description in example 6 (4.8 µmol of Zr). The polymerization reaction was maintained at a temperature of 70°C and an ethylene pressure of 4 atmospheres for 15 minutes. At the end of the reaction, the pressure was rapidly reduced and acidified methanol was added to the medium. It was obtained 3.3 g of polyethylene (Activity: 0.10 E06 g PE/ (mol Zr*hr*atm)).

### Polymerization tests with (cyclopentadienyl)((2-hydroxy-ethyl)- cyclopentadienyl) zirconium dichloride on silica functionalized with TMA

### Example 20. Polymerization of ethylene

The polymerization reaction was realized by following the procedure described in example 7. In the polymerization reactor it was injected 3 ml of MAO solution (1.5 M aluminium in toluene. To this solution it was added 0.012 g of the (cyclopentadienyl)((2-hydroxy-ethyl)- cyclopentadienyl) zirconium dichloride on silica functionalized with TMA, prepared according to the description of example 4 (4.8 µmol of Zr). The polymerization reaction was maintained at a temperature of 70°C and an ethylene pressure of 4 atmospheres for 15 minutes. At the end of the reaction, the pressure was rapidly reduced and acidified methanol was added to the medium. It was obtained 2.1 g of polyethylene (Activity: 0.44 E06 g PE/ (mol Zr*hr*atm)).

### Example 21. Polymerization of ethylene

The polymerization reaction was realized by following the procedure described in example 7. In the polymerization reactor it was injected 3 ml of MAO extracted from a solution 1.34 M in toluene. To this solution it was added 0.100 g of the (cyclopentadienyl)((2-hydroxy-ethyl)- cyclopentadienyl) zirconium dichloride on silica functionalized with TMA, prepared according to the description in example 4 (4.8 µmol of Zr). The polymerization reaction was maintained at a temperature of 70°C and an ethylene pressure of 4 atmospheres for 15 minutes. At the end of the reaction, the pressure was rapidly reduced and acidified methanol was added to the medium. It was obtained 0.16 g of polyethylene (Activity: 0.9 E05 g PE/ (mol Zr*hr*atm)).

### Example 22. Polymerization of ethylene

The polymerization reaction was realized by following the procedure described in example 7. In the polymerization reactor it was injected 1 ml of TIBA solution (1.34 M in heptane) and 2 ml of MAO solution (1.5 M aluminium in toluene). To this solution it was added 0.200 g of (cyclopentadienyl)((2-hydroxy-ethyl)-cyclopentadienyl) zirconium dichloride on silica functionalized with TMA, prepared according to the description of example 4 (4.8 µmol of Zr). The polymerization reaction was maintained at a temperature of 70°C and an ethylene pressure of 4 atmospheres for 15 minutes. At the end of the reaction, the pressure was rapidly reduced and acidified methanol was added to the medium. It was obtained 2.2 g of polyethylene with: Mv = 122.737, Mn = 74,400 Mw =244,200 Mw/Mn = 3,28 (Activity: 0.26 E06 g PE/ (mol Zr*hr*atm)).

## Claims

1. Heterogeneous catalytic component obtainable by reacting a porous inorganic support with a metallocene compound **characterized in that** the metallocene compound is defined by the following general formulas:
(LRₖ)_{z}[LR_{k-f}(R^{I}OH)_{f}]ₓMX_{y} I 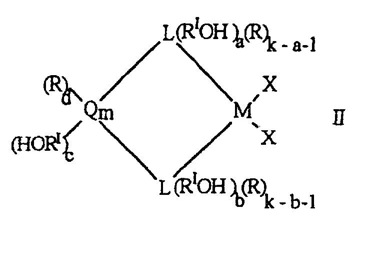 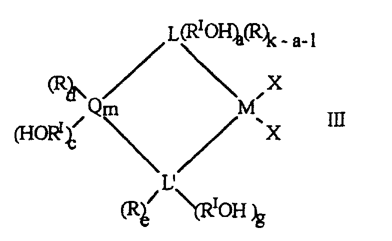
wherein:
L, equal to or different from each other, is selected from the group comprising: cyclopentadienyl, indenyl, tetrahydroindenyl, fluorenyl, octahydrofluorenyl or benzoindenyl;
each R is independently selected from hydrogen, C₁-C₂₀ alkyl, C₃-C₂₀ cycloalkyl, C₆-C₂₀ aryl, C₃-C₂₀ alkenyl, C₇-C₂₀ arylalkyl, C₇-C₂₀ alkylaryl, C₈-C₂₀ arylalkenyl, linear or branched, optionally substituted by 1 to 10 halogen atoms, or a group SiR^{II}₃;
each R^{I}, equal to or different from each other, is a divalent aliphatic or aromatic hydrocarbon group containing from 1 to 20 carbon atoms, optionally containing from 1 to 5 heteroatoms of groups 14 to 16 of the periodic table of the elements and boron ;
each Q is independently selected from B, C, Si, Ge, Sn;
M is a metal of group 3, 4 or 10 of the Periodic Table, Lanthanide or Actinide;
each X is independently selected from: hydrogen, chlorine, bromine, OR^{II}, NR^{II}₂, C₁-C₂₀ alkyl or C₆-C₂₀ aryl ;
each R^{II} is independently selected from C₁-C₂₀ alkyl , C₃-C₂₀ cycloalkyl, C₆-C₂₀ aryl, C₃-C₂₀ alkenyl, C₇-C₂₀ arylalkyl, C₇-C₂₀ arylalkenyl or alkylaryl, linear or branched; R^{II} is methyl, ethyl, isopropyl;
L' is N or O;
when L is cyclopentadienyl k is equal to 5, when L is indenyl k is equal to 7, when L is fluorenyl or benzoindenyl k is equal to 9, when L is tetrahydroindenyl k is equal to 11 and when L is octahydrofluorenyl, k is equal to 17;
z is equal to 0, 1 or 2;
x is equal to 1, 2 or 3;
y is equal to 1, 2 or 3;
x + y + z is equal to the valence of M;
m is an integer which can assume the values 1, 2, 3 or 4;
a and b are integers whose value ranges from 0 to k-1;
f is an integer whose value ranges from 1 to k;
g is 0 or 1;
c and e are equal to 0 or 1;
a + b + c is at least 1;
a + g + c is at least 1;
d is equal to 0, 1 or 2;
when Q is B then c + d = 1;
when Q is C, Si, Ge or Sn, then c + d = 2;
when L' is N, then g + e = 1;
when L' is O, then g = 0 and e = 0.

2. Heterogeneous catalytic component according to claim 1 wherein R^{I} is: C₁-C₂₀ alkylene, C₃-C₂₀cycloalkylene, C₆-C₂₀ arylene, C₇-C₂₀ alkenyl, C₇-C₂₀ arylalkylene, or alkylarylene, linear or branched, or a group SiR^{II}₂;

3. Heterogeneous catalytic component according to claim 1 wherein R'OH is selected from: CH₂-CH₂OH, CH₂-CH₂-CH₂OH, O-CH₂-CH₂OH, SiMe₂-CH₂-CH₂OH or SiMe₂-CH₂-CH₂CH₂OH.

4. Heterogeneous catalytic component according to claims 1-2 wherein M is titanium, zirconium or hafnium.

5. Heterogeneous catalytic component according to claims 1-3 wherein the inorganic support is treated with alumoxane or trialkylaluminum.

6. Heterogeneous catalytic component obtainable by reacting an alumoxane or a trialkylaluminum with a metallocene compound belonging to one of the following general formulas:
(LRₖ)_{z}[LR_{k-f}(R^{I}OH)_{f}]ₓMX_{y} I 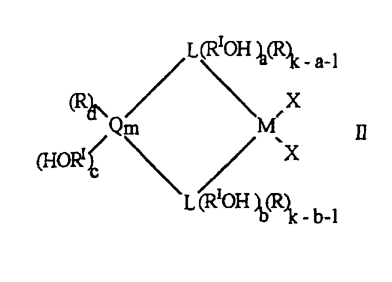 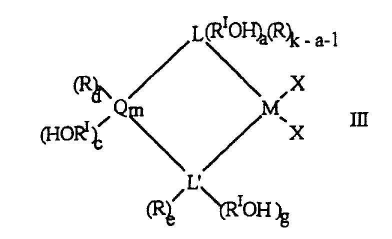
wherein:
L, equal to or different from each other, is selected from the group comprising: cyclopentadienyl, indenyl, tetrahydroindenyl, fluorenyl, octahydrofluorenyl or benzoindenyl;
each R is independently selected from hydrogen, C₁-C₂₀ alkyl, C₃-C₂₀ cycloalkyl, C₆-C₂₀ aryl, C₃-C₂₀ alkenyl, C₇-C₂₀ arylalkyl, C₇-C₂₀ alkylaryl, C₈-C₂₀ arylalkenyl, linear or branched, optionally substituted by 1 to 10 halogen atoms, or a group SiR^{II}₃;
each R^{I}, equal to or different from each other, is a divalent aliphatic or aromatic hydrocarbon group containing from 1 to 20 carbon atoms, optionally containing from 1 to 5 heteroatoms of groups 14 to 16 of the periodic table of the elements and boron ;
each Q is independently selected from B, C, Si, Ge, Sn;
M is a metal of group 3, 4 or 10 of the Periodic Table, Lanthanide or Actinide;
each X is independently selected from: hydrogen, chlorine, bromine, OR^{II}, NR^{II} ₂, C₁-C₂₀ alkyl or C₆-C₂₀ aryl ;
each R^{II} is independently selected from C₁-C₂₀ alkyl , C₃-C₂₀ cycloalkyl, C₆-C₂₀ aryl, C₃-C₂₀ alkenyl, C₇-C₂₀ arylalkyl, C₇-C₂₀ arylalkenyl or alkylaryl, linear or branched; R^{II} is methyl, ethyl, isopropyl;
L' is N or O;
when L is cyclopentadienyl k is equal to 5, when L is indenyl k is equal to 7, when L is fluorenyl or benzoindenyl k is equal to 9, when L is tetrahydroindenyl k is equal to 11 and when L is octahydrofluorenyl, k is equal to 17;
z is equal to 0, 1 or 2;
x is equal to 1, 2 or 3;
y is equal to 1, 2 or 3;
x + y + z is equal to the valence of M;
m is an integer which can assume the values 1, 2, 3 or 4;
a and b are integers whose value ranges from 0 to k-1;
f is an integer whose value ranges from 1 to k;
g is 0 or 1;
c and e are equal to 0 or 1;
a + b + c is at least 1;
a + g + c is at least 1;
d is equal to 0, 1 or 2;
when Q is B then c + d = 1;
when Q is C, Si, Ge or Sn, then c + d = 2;
when L' is N, then g + e = 1;
when L' is O, then g = 0 and e = 0.

7. Heterogeneous catalytic component according to claims 1-6 wherein in the metallocene compound at least one L is a fluorenyl or octahydrofluorenyl ring.

8. Heterogeneous catalytic system comprising the heterogeneous catalytic component of claims 1-7 and a cocatalyst selected from the group consisting of: alkylaluminoxane, trilakylaluminum, Lewis acid and mixtures thereof.

9. Process for the polymerization of alpha olefins in slurry, in gas phase, in bulk or in solution **characterized by** the use of the catalyst of claim 8.

## Patentansprüche

1. Katalytische heterogene, durch Reaktion eines porösen anorganischen Trägers mit einer Metallocenverbindung erzielbare Komponente, **dadurch gekennzeichnet, dass** die Metallocenverbindung durch folgende allgemeine Formeln bestimmt wird:
**(LR**_{**k**}**)**_{**x**}**[LR**_{**k-f**}**(R**^{**I**}**OH)**_{**f**}**]**_{**x**}**MX**_{**y**} **I** 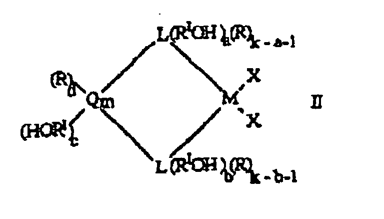 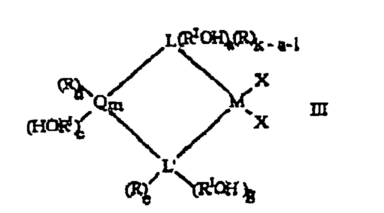
Dabei gilt:
das einander gleiche oder verschiedene L wird aus der Gruppe gewählt, die Cyclopentadienyl, Indenyl, Tetrahydroindenyl, Fluorenyl, Octahydrofluorenyl oder Benzoindonyl umfasst;
jedes R wird frei gewählt aus Wasserstoff, linearem oder verzweigtem C₁-C₂₀ -Alkyl, C₃-C₂₀ -Cycloalkyl, C₆-C₂₀ -Aryl, C₃-C₂₀ - Alkenyl, C₇-C₂₀ -Arylalkyl, C₇-C₂₀ -Alkylaryl und C₃-C₂₀ -Arylalkenyl, wahlweise substituiert durch 1 bis 10 Halogenatome oder eine Si R'₃-Gruppe;
jedes einander gleiche oder verschiedene R' ist eine zweiwertige aromatische oder aliphatische Kohlenwasserstoffgruppe, die 1 bis 20 Kohlenstoffatome enthält und wahlweise 1 bis 5 Heteroatome der Gruppen 14 bis 16 des Periodensystems der Elemente und Bor aufnimmt;
jedes Q wird frei gewählt aus B, C, Si, Ge, Sn;
M ist ein Metall der Gruppe 3, 4 oder 10 des Periodensystems, Lanthanoid oder Actinid;
jedes X wird frei gewählt aus Wasserstoff, Chlor, Brom, OR'', NR₂'', C₁-C₂₀ -Alkyl oder C₆-C₂₀ -Aryl;
jedes R' wird frei gewählt aus linearem oder verzweigtem C₁-C₂₀ -Alkyl, C₃-C₂₀ -Cycloalkyl, C₆-C₂₀ -Aryl, C₃-C₂₀ -Alkenyl, C₇-C₂₀ -Arylalkyl, C₇-C₂₀ -Arylalkenyl oder Alkylaryl; R'' ist Methyl, Ethyl, Isopropyl;
L' ist N oder 0;
wenn L Cyclopentadienyl ist, so ist k gleich 5, wenn L Indenyl ist, so ist k gleich 7, wenn L Fluorenyl oder Benzoindonyl ist, so ist k gleich 9, wenn L Tetrahydroindenyl ist, so ist k gleich 11 und wenn L Octahydrofluorenyl ist, so ist k gleich 17;
z ist gleich 0, 1 oder 2;
x ist gleich 1, 2 oder 3;
y ist gleich 1, 2 oder 3;
x + y + z ist gleich der Wertigkeit von M;
m ist eine ganze Zahl, die die Werte 1, 2, 3 oder 4 annehmen kann;
a und b sind ganze Zahlen, deren Werte von 0 bis k-1 variieren;
f ist eine ganze Zahl deren Werte von 1 bis k variieren;
g ist gleich 0 oder 1;
c und e sind gleich 0 oder 1;
a + b + c ist mindestens 1;
a + g + c ist mindestens 1;
d ist gleich 0, 1 oder 2;
wenn Q B ist, so gilt c + d = 1;
wenn Q C, Si, Ge oder Sn ist, so gilt c + d = 2;
wenn L' N ist, so gilt g + e = 1;
wenn L' O ist, so gilt g = 0 und e = 0.

2. Katalytische heterogene Komponente nach Anspruch 1, in welcher R' lineares oder verzweigtes C₁-C₂₀ -Alkylen, C₃-C₂₀ -Cycloalkylen, C₆-C₂₀ -Arylen, C₃-C₂₀ -Alkenyl, C₇-C₂₀ - Arylalkylen, C₇-C₂₀ -Arylalkylen oder Alkylarylen oder eine Si R''₂ - Gruppe ist;

3. Katalytische heterogene Komponente nach Anspruch 1, in welcher R'OH gewählt wird aus CH₂-CH₂OH, CH₂-CH₂-CH₂OH, O-CH₂-CH₂OH, SiMe₂-CH₂-CH₂OH oder SiMe₂-CH₂-CH₂CH₂OH.

4. Katalytische heterogene Komponente nach den Ansprüchen 1 bis 2, in welcher M Titan, Zirkonium oder Hafnium ist.

5. Katalytische heterogene Komponente nach den Ansprüchen 1 bis 3, in welcher der anorganische Träger mit Alumoxan oder Trialkylaluminium behandelt wird.

6. Katalytische heterogene, durch Reaktion eines Alumoxans oder Trialkylaluminiums mit einer Metallocenverbindung erzielbare Komponente, wobei die Metallocenverbindung eine der folgenden allgemeinen Formeln besitzt:
**(LR**_{**k**}**)**_{**z**}**[LR**_{**k-f**}**(R**^{**I**}**OH)**_{**f**}**]**_{**x**}**MX**_{**y**} **I** 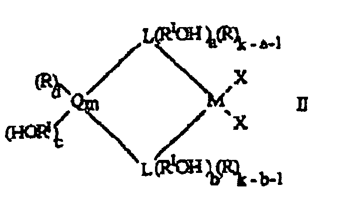 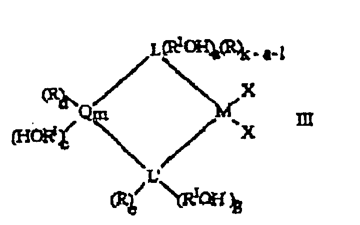
Dabei gilt:
das einander gleiche oder verschiedene L wird aus der Gruppe gewählt, die Cyclopentadienyl, Indenyl, Tetrahydroindenyl, Fluorenyl, Octahydrofluorenyl oder Benzoindonyl enthält;
jedes R wird frei gewählt aus Wasserstoff, linearem oder verzweigtem C₁-C₂₀ -Alkyl, C₃-C₂₀ -Cycloalkyl, C₆-C₂₀ -Aryl, C₃-C₂₀ - Alkenyl, C₇-C₂₀ -Arylalkyl, C₇-C₂₀ -Alkylaryl und C₃-C₂₀ -Arylalkenyl, wahlweise substituiert durch 1 bis 10 Halogenatome oder eine Si R'₃ -Gruppe;
jedes einander gleiche oder verschiedene R' ist eine aromatische oder aliphatische zweiwertige Kohlenwasserstoffgruppe, die 1 bis 20 Kohlenstoffatome enthält und wahlweise 1 bis 5 Heteroatome der Gruppen 14 bis 16 des Periodensystems der Elemente und Bor aufnimmt; jedes Q wird frei gewählt aus B, C, Si, Ge, Sn;
M ist ein Metall der Gruppe 3, 4 oder 10 des Periodensystems der Elemente, Lanthanoid oder Actinid;
jedes X wird frei gewählt aus Wasserstoff, Chlor, Brom, OR'', NR₂'', C₁-C₂₀ -Alkyl oder C₆-C₂₀ -Aryl;
jedes R' wird frei gewählt aus linearem oder verzweigtem C₁-C₂₀ -Alkyl, C₃-C₂₀ -Cycloalkyl, C₃-C₂₀ -Aryl, C₃-C₂₀ -Alkenyl, C₇-C₂₀ -Arylalkyl, C₇-C₂₀ -Arylalkenyl oder Alkylaryl; R'' ist Methyl, Ethyl, Isopropyl;
L' ist N oder O;
wenn L Cyclopentadienyl ist, so ist k gleich 5, wenn L Indenyl ist, so ist k gleich 7, wenn L Fluorenyl oder Benzoindonyl ist, so ist k gleich 9, wenn L Tetrahydroindenyl ist, so ist k gleich 11 und wenn L Octahydrofluorenyl ist, so ist k gleich 17;
z ist gleich 0, 1 oder 2;
x ist gleich 1, 2 oder 3;
y ist gleich 1, 2 oder 3;
x + y + z ist gleich der Wertigkeit von M;
m ist eine ganze Zahl, die die Werte 1, 2, 3 oder 4 annehmen kann;
a und b sind ganze Zahlen, deren Werte von 0 bis k-1 variieren;
f ist eine ganze Zahl deren Werte von 1 bis k variieren;
g ist gleich 0 oder 1;
c und e sind gleich 0 oder 1;
a + b + c ist mindestens 1;
a + g + c ist mindestens 1;
d ist gleich 0, 1 oder 2;
wenn Q B ist, so gilt c + d = 1;
wenn Q C, Si, Ge oder Sn ist, so gilt c + d = 2;
wenn L' N ist, so gilt g + e = 1;
wenn L' O ist, so gilt g = 0 und e = 0.

7. Katalytische heterogene Komponente nach den Ansprüchen 1 bis 6, in welcher zumindest ein L in der Metallocenverbindung ein Fluorenyl-Ring oder Octahydrofluorenyl-Ring ist.

8. Katalytisches heterogenes System, welches die katalytische heterogene Komponente nach den Ansprüchen 1 bis 7 und einen Co-Katalysator umfasst, der aus der Gruppe ausgewählt wird, die aus Alkylaluminoxan, Trialkylaluminium, Lewis-Säure und deren Gemischen besteht.

9. Verfahren zur Polymerisation von Alpha- Alkenen in Suspension, in gasförmiger Phase, in loser Schüttung oder in Lösung, **gekennzeichnet durch** Verwendung des Katalysators aus Anspruch 8.

## Revendications

1. Composant catalytique hétérogène que l'on peut obtenir par réaction d'un support poreux inorganique avec un composé métallocène **caractérisé en ce que** le composé métallocène est défini selon les formules générales suivantes :
**(LR**_{**k**}**)**_{**z**}**[LR**_{**k-f**}**(R**^{**I**}**OH)**_{**f**}**]**_{**x**}**MX**_{**y**} **I** 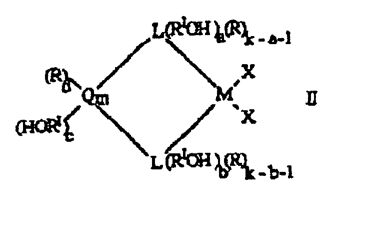 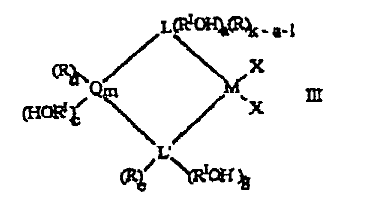
où :
L, identiques ou différents entre eux, sont sélectionnés parmi le groupe qui comprend : cyclopentadiényl, indényl, tétrahydroindényl, fluorényl, octahydrofluorényl ou benzoindényl ;
chaque R est sélectionné indépendamment parmi l'hydrogène, C₁-C₂₀ alkyl, C₃-C₂₀ cycloalkyl, C₆-C₂₀ aryl, C₃-C₂₀ alkenyl, C₇-C₂₀ aryl-alkyl, C₇-C₂₀ alkyl-aryl, C₃-C₂₀ aryl-alkényl, linéaires ou ramifiés, remplacés en option par 1 à 10 atomes d'halogène ou un groupe Si R'₃ ;
chaque R'' identiques ou différents entre eux, est un groupe hydrocarboné aromatique ou aliphatique divalent qui contient de 1 à 20 atomes de carbone, qui en option contient de 1 à 5 hétéro-atomes des groupes 14 à 16 de la classification périodique des éléments et du Bore ;
chaque Q est sélectionné indépendamment parmi le B, C, Si, Ge, Sn ;
M est un métal du groupe 3, 4 ou 10 de la classification périodique, Lanthanide ou Actinide ;
chaque X est sélectionné indépendamment parmi :
l'hydrogène, le chlore, le brome, OR'', NR₂'', C₁-C₂₀ alkyl ou C₆-C₂₀ aryl ;
chaque R' est sélectionné indépendamment parmi C₁-C₂₀ alkyl, C₃-C₂₀ cyclo-alkyl, C₆-C₂₀ aryl, C₃-C₂₀ alkényl, C₇-C₂₀ aryl-alkyl, C₇-C₂₀ aryl-alkényl ou alkyl-aryl, linéaires ou ramifiés; R'' est méthyle, éthyle, isopropyle ;
L' est N ou O ;
Quand L est cyclopentadiényl, k est égal à 5 ; quand L est indényl, k est égal à 7 ; quand L est fluorényl ou benzoindényl, k est égal à 9 ; quand L est tétrahydroindényl, k est égal à 11 et quand L est octahydrofluorényl, k est égal à 17 ;
z est égal à 0, 1 ou 2 ;
x est égal à 1, 2 ou 3 ;
y est égal à 1, 2 ou 3 ;
x + y + z est égal à la valence de M ;
m est un nombre entier qui peut prendre les valeurs de 1, 2, 3 ou 4 ;
a et b sont des nombres entiers dont les valeurs varient entre 0 et k-1 ;
f est un nombre entier dont les valeurs varient entre 1 et k ;
g est 0 ou 1 ;
c et e sont égaux à 0 ou 1 ;
a + b + c est au moins 1 ;
a + g + c est au moins 1 ;
d est égal à 0, 1 ou 2 ;
quand Q est B, alors c + d = 1 ;
quand Q est C, Si, Ge ou Sn, alors c + d = 2 ;
quand L' est N, alors g + e = 1;
quand L' est O, alors g = 0 et e = 0.

2. Composant catalytique hétérogène selon la revendication 1 où R' est: C₁-C₂₀ alkylène, C₃-C₂₀ cycloalkylène, C₆-C₂₀ arylène, C₃-C₂₀ alkényl, C₇-C₂₀ aryl-alkylène, C₇-C₂₀ aryl-alkylène ou alkyl-arylène, linéaires ou ramifiés ou un groupe Si R''₂ ;

3. Composant catalytique hétérogène selon la revendication 1 où R'OH est sélectionné parmi : CH₂-CH₂OH, CH₂-CH₂-CH₂OH, O-CH₂-CH₂OH, SiMe₂-CH₂-CH₂OH ou SiMe₂-CH₂-CH₂CH₂OH.

4. Composant catalytique hétérogène selon les revendications de 1 à 2 où M est titane, zirconium ou hafnium.

5. Composant catalytique hétérogène selon les revendications de 1 à 3 où le support inorganique est traité avec de l'aluminoxane ou du trialkylaluminium.

6. Composant catalytique hétérogène que l'on peut obtenir par réaction d'un aluminoxane ou d'un trialkylaluminium avec un composé métallocène appartenant à une des formules générales suivantes :
**(LR**_{**k**}**)**_{**z**}**[LR**_{**k-f**}**(R**^{**I**}**OH)**_{**f**}**]**_{**x**}**MX**_{**y**} **I** 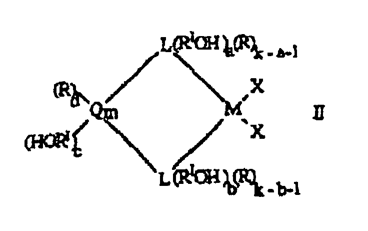 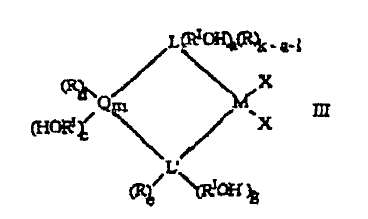
où :
L, identiques ou différents entre eux, est sélectionné parmi le groupe qui comprend du : cyclopentadiényl, indényl, tétrahydroindényl, fluorényl, octahydrofluorényl ou benzoindényl ;
chaque R est sélectionné indépendamment parmi l'hydrogène, C₁-C₂₀ alkyl, C₃-C₂₀ cycloalkyl, C₆-C₂₀ aryl, C₃-C₂₀ alkényl, C₇-C₂₀ aryl-alkyl, C₇-C₂₀ alkyl-aryl, C₃-C₂₀ aryl-alkényl, linéaires ou ramifiés, en option remplacés par 1 à 10 atomes d'halogène ou un groupe Si R'₃ ;
chaque R', identiques ou différents entre eux, est un groupe hydrocarboné aromatique ou aliphatique divalent qui contient de 1 à 20 atomes de carbone, qui en option contient de 1 à 5 hétéro-atomes des groupes 14 à 16 de la classification périodique des éléments et du Bore;
chaque Q est sélectionné indépendamment parmi le B, C, Si, Ge, Sn ;
M est un métal du groupe 3, 4 ou 10 de la classification périodique des éléments, Lanthanide ou Actinide ;
chaque X est sélectionné indépendamment parmi :
hydrogène, chlore, brome, OR'', NR₂'', C₁-C₂₀ alkyl ou C₆-C₂₀ aryl;
chaque R'' est sélectionné indépendamment parmi C₁-C₂₀ alkyl, C₃-C₂₀ cycloalkyl, C₃-C₂₀ aryl, C₃-C₂₀ alkényl, C₇-C₂₀ aryl-alkyl, C₇-C₂₀ aryl-alkényl ou alkyl-aryl, linéaires ou ramifiés; R'' est méthyle, éthyle, isopropyle ;
L' est N ou O ;
Quand L est cyclopentadiényl, k est égal à 5 ; quand L est indényl, k est égal à 7 ; quand L est fluorényl ou benzoindényl, k est égal à 9 ; quand L est tétrahydroindényl, k est égal à 11 et quand L est octahydrofluorényl, k est égal à 17 ;
z est égal à 0, 1 ou 2 ;
x est égal à 1, 2 ou 3 ;
y est égal à 1, 2 ou 3 ;
x + y + z est égal à la valence de M ;
m est un nombre entier qui peut prendre les valeurs de 1, 2, 3 ou 4 ;
a et b sont des nombres entiers dont les valeurs varient entre 0 et k-1 ;
f est un nombre entier dont les valeurs varient entre 1 et k ;
g est 0 ou 1 ;
c et e sont égaux à 0 ou 1 ;
a + b + c est au moins 1 ;
a + g + c est au moins 1 ;
d est égal à 0, 1 ou 2 ;
quand Q est B, alors c + d = 1 ;
quand Q est C, Si, Ge ou Sn, alors c + d = 2 ;
quand L' est N, alors g + e = 1 ;
quand L' est O, alors g = 0 et e = 0.

7. Composant catalytique hétérogène selon les revendications de 1 à 6 où, dans le composé métallocène, au moins un L est un anneau fluorényl ou octahydrofluorényl.

8. Système catalytique hétérogène qui comprend le composant catalytique hétérogène des revendications 1 à 7 et un co-catalyseur sélectionné parmi le groupe formé de : alkyl-aluminoxane, trialkyl-aluminium, acide de Lewis et ses mélanges.

9. Procédé pour la polymérisation des alpha-oléfines en suspension, en phase gazeuse, en gros ou en solution, **caractérisé par** l'utilisation du catalyseur de la revendication n°8.
